(19) **Europäisches Patentamt / European Patent Office / Office européen des brevets**

(11) **EP 4 604 653 A1**

(12) **EUROPEAN PATENT APPLICATION**
published in accordance with Art. 153(4) EPC

(43) Date of publication:
**20.08.2025 Bulletin 2025/34**

(21) Application number: **23912576.8**

(22) Date of filing: **17.11.2023**

(51) International Patent Classification (IPC):
**H04W 72/541** (2023.01)     **H04W 72/04** (2023.01)
**H04W 72/232** (2023.01)     **H04W 24/08** (2009.01)
**H04W 72/21** (2023.01)     **H04W 72/0457** (2023.01)
**H04W 72/12** (2023.01)

(52) Cooperative Patent Classification (CPC):
**H04W 24/08; H04W 72/04; H04W 72/0457;
H04W 72/12; H04W 72/21; H04W 72/232;
H04W 72/541**

(86) International application number:
**PCT/KR2023/018573**

(87) International publication number:
**WO 2024/143900 (04.07.2024 Gazette 2024/27)**

(84) Designated Contracting States:
**AL AT BE BG CH CY CZ DE DK EE ES FI FR GB
GR HR HU IE IS IT LI LT LU MC ME MK MT NL
NO PL PT RO RS SE SI SK SM TR**
Designated Extension States:
**BA**
Designated Validation States:
**KH MA MD TN**

(30) Priority: **28.12.2022 KR 20220186970
20.03.2023 KR 20230036113
07.04.2023 KR 20230046359**

(71) Applicant: **Samsung Electronics Co., Ltd.
Suwon-si, Gyeonggi-do 16677 (KR)**

(72) Inventors:
• **KIM, Jinsung
Suwon-si, Gyeonggi-do 16677 (KR)**
• **HONG, Sungnam
Suwon-si, Gyeonggi-do 16677 (KR)**
• **HONG, Kiseob
Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **DEVICE AND METHOD FOR ALLOCATING UPLINK RESOURCES IN WIRELESS COMMUNICATION SYSTEM**

(57)     A device of a base station may comprise: a memory that stores instructions; a transceiver; and a processor. The device may cause the instructions, when executed by the processor, to be performed to: receive uplink signals within symbols in a first slot; obtain an interference intensity of a symbol with an index that can be used for transmission of a sounding reference signal (SRS) on a neighbor cell among the symbols in the first slot; determine, among symbols in a second slot, at least one symbol each having at least another index distinct from said index, as a time resource for uplink data that may be transmitted from user equipment within the second slot; and transmit, to the user equipment, downlink control information indicating at least one of the symbols in the second slot, which are the time resources for the uplink data that may be transmitted within the second slot.

FIG. 8

EP 4 604 653 A1

**Description**

**[Technical Field]**

The disclosure relates to an apparatus and a method for allocating uplink resource in a wireless communication system.

**[Background Art]**

An apparatus performing communication in a wireless communication system may include a base station and a terminal. The base station may receive a signal from the terminal. The signal transmitted from the terminal may be referred to as an uplink signal. Resources for transmitting the uplink signal may be allocated by the base station. The base station may provide information on the allocated resource to the terminal.

**[Disclosure]**

**[Technical Solution]**

According to various example embodiments, a method performed by an apparatus of a base station may comprise obtaining an uplink signal within a plurality of first symbols in first time interval. The method may comprise, based on identifying interference strength of a first interference symbol of the plurality of the first symbols greater than or equal to threshold strength, identifying a second resource region, which is allocatable, distinguished from a first resource region of a second interference symbol of a plurality of second symbols in an entire resource region of the plurality of the second symbols in second time interval different from the first time interval. The method may comprise transmitting, to a terminal, downlink control information indicating resources allocated within the second resource region. The method may comprise receiving, from the terminal, uplink data on the resources. The entire resource region may be identified using the plurality of the second symbols and a bandwidth. The first resource region may be identified using the second interference symbol and the bandwidth identified based on an index for indicating the first interference symbol.

According to various example embodiments, an apparatus of a base station may comprise a transceiver. The apparatus may comprise a processor operatively coupled the transceiver. The processor may be configured to obtain an uplink signal within a plurality of first symbols in first time interval. The processor may be configured to, identify a second resource region, which is allocatable, distinguished from a first resource region of a second interference symbol of a plurality of second symbols in an entire resource region of the plurality of the second symbols in second time interval different from the first time interval, based on identifying interference strength of a first interference symbol of the plurality of the first symbols greater than or equal to threshold strength. The processor may be configured to transmit, to a terminal, downlink control information indicating resources allocated within the second resource region. The processor may be configured to receive, from the terminal, uplink data on the resources. The entire resource region may be identified using the plurality of the second symbols and a bandwidth. The first resource region may be identified using the second interference symbol and the bandwidth identified based on an index for indicating the first interference symbol.

According to various example embodiments, a device of a base station, may comprise memory storing instructions. The device may comprise a transceiver. The device may comprise a processor. The instructions, when executed by the processor, may cause the device to, receive, through the transceiver, uplink signals within symbols of a first slot. The instructions, when executed by the processor, may cause the device to, in response to receiving the uplink signals, obtain an interference strength of a symbol that has an index usable for transmission of a sounding reference signal (SRS) on a neighbor cell from among the symbols of the first slot. The instructions, when executed by the processor, may cause the device to, based on the interference strength greater than a threshold strength, determine, as time resources for uplink data to be transmitted from a user equipment (UE) within a second slot, at least one symbol respectively having at least another index distinct from the index usable for the transmission of the SRS on the neighbor cell, from among symbols of the second slot. The instructions, when executed by the processor, may cause the device to, transmit, through the transceiver to the UE, downlink control information indicating the determined at least one symbol from among the symbols of the second slot as the time resources for the uplink data to be transmitted within the second slot from the UE. The downlink control information may be to be used by the UE for preventing transmission of uplink data within a symbol of the second slot having the index usable for transmission of an SRS on the neighbor cell.

According to various example embodiments, a method performed by a device of a base station, may comprise receiving uplink signals within symbols of a first slot. The method performed by a device of a base station, may comprise in response to receiving the uplink signals, obtaining an interference strength of a symbol that has an index usable for transmission of a sounding reference signal (SRS) on a neighbor cell from among the symbols of the first slot. The method performed by a device of a base station, may comprise based on the interference strength greater than a threshold strength, determining, as time resources for uplink data to be transmitted from a user equipment (UE) within a second slot, at least one symbol respectively having at least another index distinct from the index usable for the transmission of the SRS on the neighbor cell, from among symbols of the second slot. The method performed by a device of a base station, may comprise transmitting downlink control information indicating the determined at least one symbol from among the symbols of the second slot as the time resources for the uplink data to be transmitted within the second slot from the UE. The downlink control information may be to be used by the UE for preventing transmission of uplink data within a symbol of the second slot having the index usable for transmission of an SRS on the neighbor cell.

According to various example embodiments, a computer-readable storage medium may include instructions. The instructions, when executed by a processor of a device of a base station comprising a transceiver, may cause the device to receive, through the transceiver, uplink signals within symbols of a first slot. The instructions, when executed by a processor of a device of a base station comprising a transceiver, may cause the device to, in response to receiving the uplink signals, obtain an interference strength of a symbol that has an index usable for transmission of a sounding reference signal (SRS) on a neighbor cell from among the symbols of the first slot. The instructions, when executed by a processor of a device of a base station comprising a transceiver, may cause the device to, based on the interference strength greater than a threshold strength, determine, as time resources for uplink data to be transmitted from a user equipment (UE) within a second slot, at least one symbol respectively having at least another index distinct from the index usable for the transmission of the SRS on the neighbor cell, from among symbols of the second slot. The instructions, when executed by a processor of a device of a base station comprising a transceiver, may cause the device to transmit, through the transceiver to the UE, downlink control information indicating the determined at least one symbol from among the symbols of the second slot as the time resources for the uplink data to be transmitted within the second slot from the UE. The downlink control information may be to be used by the UE for preventing transmission of uplink data within a symbol of the second slot having the index usable for transmission of an SRS on the neighbor cell.

**[Description of the Drawings]**

The above and other aspects, features and advantages of certain embodiments of the present disclosure will be more apparent from the following detailed description, taken in conjunction with the accompanying drawings, in which:

FIG. 1 is a diagram illustrating an example of a wireless communication system according to various embodiments;
FIG. 2A is a block diagram illustrating an example of a fronthaul interface according to various embodiments;
FIG. 2B is a diagram illustrating an example of a function split between a DU and an RU according to various embodiments;
FIG. 3 is a diagram illustrating an example of a resource structure in a time region and a frequency region according to various embodiments;
FIG. 4A is a signal flow diagram illustrating an example of allocating an uplink resource and receiving an uplink signal according to various embodiments;
FIG. 4B is a diagram illustrating examples of an uplink resource allocation according to various embodiments;
FIG. 5 is a diagram illustrating an example method of identifying an allocatable resource region based on interference strength for each symbol according to various embodiments;
FIG. 6A is a diagram illustrating an example of a symbol capable of being transmitted an interference signal according to various embodiments;
FIG. 6B is a diagram illustrating examples of an uplink signal for estimating interference strength for each symbol according to various embodiments;
FIG. 7A is a diagram illustrating an example method of identifying an allocatable resource region in a time region at which an uplink signal is received according to various embodiments;
FIG. 7B is a diagram illustrating an example method of identifying an allocatable resource region in a time region for performing scheduling according to various embodiments;
FIG. 8 is a diagram illustrating an example of identifying the number of a symbol in an allocatable resource region according to various embodiments;
FIG. 9 is a diagram illustrating an example method of performing decoding based on interference strength of a symbol according to various embodiments;
FIG. 10 is a diagram illustrating an example method of estimating interference strength for each symbol based on the number of resources according to various embodiments;
FIG. 11 is a diagram illustrating an example of performing a resource allocation based on timing of estimating interference strength and timing of performing scheduling according to various embodiments;
FIG. 12 is a flowchart illustrating an example method of identifying an allocatable resource region based on interference strength according to various embodiments;
FIG. 13 is a flowchart illustrating an example method of performing a resource allocation based on interference strength and receiving an uplink signal according to various embodiments;

FIG. 14 is a graph indicating reception performance according to an interference degree according to various embodiments;

FIG. 15 is a diagram illustrating an example method of identifying an allocatable resource region based on information related to an interference signal according to various embodiments;

FIG. 16 is a flowchart illustrating an example method of identifying an allocatable resource region based on information related to an interference signal according to various embodiments; and

FIG. 17 is a block diagram illustrating an example configuration of a base station according to various embodiments.

## DETAILED DESCRIPTION

Terms used in the present disclosure are used to describe various example embodiments and are not intended to limit the scope of the disclosure. A singular expression may include a plural expression unless it is clearly meant differently in the context. The terms used herein, including a technical or scientific term, may have the same meaning as generally understood by a person having ordinary knowledge in the technical field described in the present disclosure. Terms defined in a general dictionary among the terms used in the present disclosure may be interpreted with the same or similar meaning as a contextual meaning of related technology, and unless clearly defined in the present disclosure, it is not to be interpreted in an ideal or excessively formal meaning. In some cases, even terms defined in the present disclosure should not be interpreted to exclude embodiments of the present disclosure.

In various example embodiments of the present disclosure described below, a hardware approach is described as an example. However, since the various embodiments of the present disclosure include technology that use both hardware and software, the various embodiments of the present disclosure do not exclude a software-based approach.

A term referring to a signal (e.g., signal, information, symbol, message, signaling, reference signal (RS), data), a term referring resource (e.g., symbol, slot, subframe, radio frame, subcarrier, resource element (RE), resource block (RB), bandwidth part (BWP), occasion), a term for operation state (e.g., step, operation, procedure), a term referring to data (e.g., packet, user stream, information, bit, symbol, codeword), a term referring to a channel, a term referring to a component of an electronic apparatus, and the like are used in the following description for convenience of description. Accordingly, the present disclosure is not limited to terms described below, and another term having an equivalent technical meaning may be used.

In addition, in the present disclosure, in order to determine whether a specific condition is satisfied or fulfilled, an expression of more than or less than may be used, but this is simply a non-limiting description for expressing an example and does not exclude description of more than or equal to or less than or equal to. A condition described as 'more than or equal to' may be replaced with ' more than', a condition described as 'less than or equal to' may be replaced with 'less than', and a condition described as 'more than or equal to and less than' may be replaced with 'more than and less than or equal to'. In addition, hereinafter, 'A' to 'B' may refer, for example, to at least one of elements from A (including A) and to B (including B). Hereinafter, 'C' and/or 'D' may refer, for example, to including at least one of 'C' or 'D', that is, {'C', 'D', 'C' and 'D'}.

Although the present disclosure describes various example embodiments using terms used in a part of communication standards (e.g., 3rd Generation Partnership Project (3GPP)), it is merely an example for explanation. Embodiments of the present disclosure may also be applied to other communication and broadcasting system.

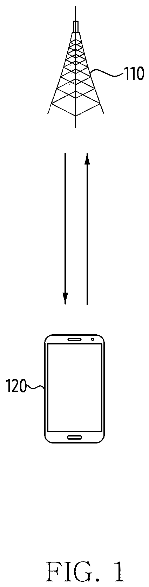

FIG. 1 is a diagram illustrating an example of a wireless communication system according to various embodiments.

Referring to FIG. 1, it illustrates a base station 110 and a terminal 120 as parts of nodes using a wireless channel in a wireless communication system. Although FIG. 1 illustrates only one base station, the wireless communication system may further include another base station that is the same as or similar to the base station 110.

The base station 110 may refer to a network infrastructure that provides wireless access to the terminal 120. The base station 110 may have a coverage defined based on a distance capable of transmitting a signal. In addition to the term 'base station', the base station 110 may be referred to as 'access point (AP), 'eNodeB (eNB)', '5th generation node', 'next generation nodeB (gNB)', 'wireless point', 'transmission/reception', or other terms having the same or equivalent meaning thereto.

The terminal 120, may refer to a device used by a user, performs communications with the base station 110 through a wireless channel. A link from the base station 110 to the terminal 120 is referred to as a downlink (DL), and a link from the terminal 120 to the base station 110 is referred to as an uplink (UL). Further, although not shown in FIG. 1, the terminal 120 and other terminals may perform communications with each other through the wireless channel. In this context, a link between the terminal 120 and another terminals (device-to-device link, D2D) is referred to as a side link, and the side link may be used mixed with a PC5 interface. In some other embodiments of the disclosure, the terminal 120 may be operated without any user's involvement. According to an embodiment of the disclosure, the terminal 120 is a device that performs machine-type communication (MTC) and may not be carried by a user. In addition, according to an embodiment of the disclosure, the terminal 120 may be a narrowband (NB)-Internet of things (IoT) device.

The terminal 120 may be referred to as 'user equipment (UE), 'customer premises equipment (CPE), 'mobile station', 'subscriber station', 'remote terminal', 'wireless terminal', 'electronic device', 'user device', or any other term having the same or equivalent technical meaning thereto.

The base station 110 may perform beamforming with the terminal 120. The base station 110 and the terminal 120 may transmit and receive radio signals in a relatively low frequency band (e.g., FR 1 (frequency range 1) of NR). Further, the base station 110 and the terminal 120 may transmit and receive radio signals in a relatively high frequency band (e.g., FR 2 of NR (or FR 2-1, FR 2-2, FR 2-3), FR 3, or millimeter wave (mmWave) bands (e.g., 28 GHz, 30 GHz, 38 GHz, 60 GHz)). In order to improve the channel gain, the base station 110 and the terminal 120 may perform beamforming. In this context, the beamforming may include transmission beamforming and reception beamforming. The base station 110 and the terminal 120 may assign directionality to a transmission signal or a reception signal. To that end, the base station 110 and the terminal 120 may select serving beams through a beam search or beam management procedure. After the serving beams are selected, subsequent communication may be performed through a resource having a quasi-co located (QCL) relationship with a resource that has transmitted the serving beams.

A first antenna port and a second antenna port may be evaluated to be in such a QCL relationship, if the wide-scale characteristics of a channel carrying symbols on the first antenna port can be estimated from a channel carrying symbols on the second antenna port. For example, the wide-scale characteristics may include at least one of delay spread, Doppler spread, Doppler shift, average gain, average delay, and spatial receiver parameters.

Although in FIG. 1, both the base station 110 and the terminal 120 are described as performing beamforming, embodiments of the disclosure are not necessarily limited thereto. In various embodiments of the disclosure, the terminal 120 may or may not perform beamforming. Likewise, the base station 110 may or may not perform beamforming. In other words, either one of the base station and the terminal may perform beamforming, or both the base station and the terminal may not perform beamforming.

In the disclosure, a beam may refer, for example, to a spatial flow of a signal in a radio channel, and may be formed by one or more antennas (or antenna elements), of which formation process may be referred to as beamforming. The beamforming may include at least one of analog beamforming and digital beamforming (e.g., precoding). Reference signals transmitted based on beamforming may include, for example, a demodulation-reference signal (DM-RS), a channel state information-reference signal (CSI-RS), a synchronization signal/physical broadcast channel (SS/PBCH), or a sounding reference signal (SRS). Further, for a configuration for each reference signal, an IE, such as a CSI-RS resource, an SRS-resource, or the like may be used, and the configuration may include information associated with a beam. Beam-associated information may refer to whether a corresponding configuration (e.g., CSI-RS resource) uses the same spatial domain filter as other configuration (e.g., another CSI-RS resource within the same CSI-RS resource set) or uses a different spatial domain filter, or with which reference signal is QCL, or if QCLed, what type (e.g., QCL type A, B, C, or D) it has.

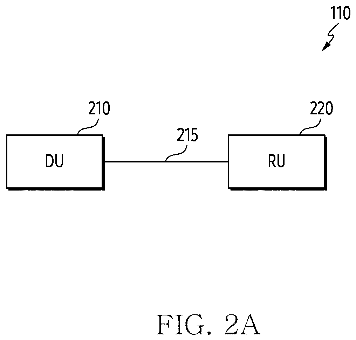

FIG. 2A is a block diagram illustrating an example of a fronthaul interface according to various embodiments. Unlike a backhaul between a base station and a core network, the fronthaul refers to entities between a wireless LAN and the base station.

FIG. 2A illustrates an example of a fronthaul structure between a distributed unit (DU) 210 and one radio unit (RU) 220, but this is only for convenience of explanation and the present disclosure is not limited thereto. In other words, an embodiment of the present disclosure may also be applied to a fronthaul structure between one DU and a plurality of RUs. For example, an embodiment of the present disclosure may be applied to a fronthaul structure between one DU and two RUs. In addition, the embodiment of the present disclosure may be applied to a fronthaul structure between one DU and three RUs.

Referring to FIG. 2A, the base station 110 may include the DU 210 and the RU 220. A fronthaul 215 between the DU 210 and the RU 220 may be operated through an Fx interface. For example, an interface such as an enhanced common public radio interface (eCPRI) and a radio over Ethernet (ROE) may be used for operation of fronthaul 215.

As communication technology developed, mobile data traffic increased, and as a result, bandwidth requirement required by a fronthaul between a digital unit and a wireless unit increased significantly. In a deployment such as a centralized/cloud radio access network (C-RAN), the DU may be implemented to perform functions for packet data convergence protocol (PDCP), radio link control (RLC), media access control (MAC), and physical (PHY), and the RU may be implemented to perform more functions for the PHY layer in addition to radio frequency (RF) function.

The DU 210 may be in charge of a higher layer function of a wireless network. For example, the DU 210 may perform a function of a MAC layer and a part of the PHY layer. Herein, the part of the PHY layer is performed at a higher level among the functions of the PHY layer, and as an example, may include channel encoding (or channel decoding), scrambling (or descrambling), modulation (or demodulation), or layer mapping (or layer de-mapping). According to an embodiment, when the DU 210 conforms to O-RAN standard, it may be referred to as O-RANDU (O-DU). In embodiments of the present disclosure, when necessary, the DU 210 may be represented by being replaced with a first network entity for a base station (e.g., gNB).

The RU 220 may perform a lower layer function of the wireless network. For example, the RU 220 may perform an RF function and a function of a part of the PHY layer. Herein, the part of the PHY layer is performed at a relatively lower level than the DU 210 among the functions of the PHY layer, and as an example, may include iFFT conversion (or FFT conversion), CP insertion (CP removal), digital beamforming. The RU 220 may be referred to as an access unit (AU), access point (AP), transmission/reception point (TRP), remote radio head (RRH), radio unit (RU) or another term having equivalent technical meaning. According to an embodiment, when the RU 220 conforms to the O-RAN standard, it may be referred to as an O-RAN RU (O-RU). In embodiments of the present disclosure, when necessary, the RU 220 may be represented by being replaced with a second network entity for a base station (e.g., gNB).

Although the base station 110 is described as including the DU 210 and the RU 220 in FIG. 2A, embodiments of the present disclosure are not limited thereto. A base station according to embodiments may be implemented in a distributed deployment according to a centralized unit (CU) configured to perform a function of upper layers (e.g., packet data convergence protocol (PDCP), radio resource control (RRC)) of the access network and a distributed unit (DU) configured to perform a functions of a lower layer. In this case, the distributed unit (DU) may include a digital unit (DU) and a radio unit (RU). The base station may be implemented in a structure arranged in the order of CU, DU, and RU, between a core (e.g., 5G core (5GC) or next generation core (NGC)) network and a radio network (RAN). An interface between the CU and the distributed unit (DU) may be referred to as an F1 interface.

The centralized unit (CU) may be connected with one or more DUs to be in charge of a higher layer function than the DU. For example, the CU may be in charge of radio resource control (RRC) and packet data convergence protocol (PDCP) layer function, and the DU and RU may be in charge of a lower layer function. The DU may perform radio link control (RLC), media access control (MAC), and a part (high PHY) of functions of the physical (PHY) layer, and the RU may be in charge of remaining functions (low PHY) of the PHY layer. In addition, as an example, a digital unit (DU) may be included in a distributed unit (DU) according to a distributed deployment implementation of a base station. Hereinafter, operations of a digital unit (DU) and an RU are described unless otherwise defined, but various embodiments of the present disclosure may be applied to a base station deployment including the CU or a deployment in which the DU is directly connected to a core network (e.g., the CU and the DU are integrated into a base station (e.g., NG-RAN node) as one entity and implemented).

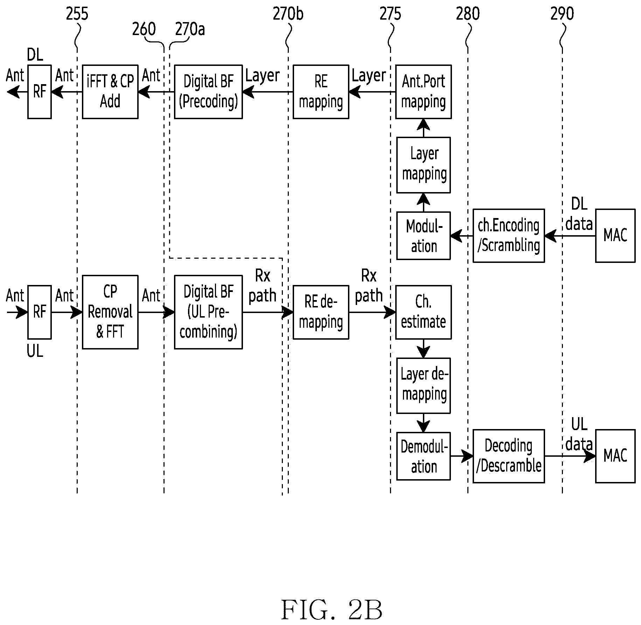

FIG. 2B is a diagram illustrating an example of a function split between a DU and an RU according to various embodiments.

As wireless communication technology develops (e.g., introduction of a 5th generation (5G) communication system or a new radio (NR) communication system), a frequency band used further increased. As cell radius of the base station becomes very small, the number of RUs required to be installed further increased. In addition, in the 5G communication system, amount of data transmitted increased by more than 10 times, and the transmission capacity of the wired network transmitted to the fronthaul greatly increased. Due to the above-described factors, the installation cost of the wired network in the 5G communication system may increase significantly. Therefore, in order to lower the transmission capacity of the wired network and reduce the installation cost of the wired network, function split, which lowers the fronthaul transmission capacity by transferring a part of functions of the modem of the DU to the RU, may be used.

In order to reduce the burden of the DU, a role of the RU in charge of the existing RF function may be extended to a part of functions of the physical layer. As the RU performs functions of a higher layer, throughput of the RU increases so that the transmission bandwidth in the fronthaul increases, and at the same time, delay time requirement constraints due to response processing may be lowered. On the other hand, as the RU performs the functions of a higher layer, a gain of virtualization decreases and the size, weight, and cost of the RU increase. It is required to implement an optimal function split in consideration of the trade-off of the above-described advantages and disadvantages.

Referring to FIG. 2B, function splits in a physical layer below a MAC layer are illustrated. In a case of a downlink (DL) that transmits a signal to a terminal via a wireless network, the base station may sequentially perform channel encoding/scrambling, modulation, layer mapping, antenna mapping, RE mapping, digital beamforming (e.g., precoding), iFFT conversion/CP insertion, and RF conversion. In a case of an uplink (UL) that receives a signal from a terminal via a wireless network, the base station may sequentially perform RF conversion, FFT conversion/CP removal, digital beamforming (pre-combining), RE de-mapping, channel estimation, layer de-mapping, demodulation, decoding/de-scrambling. The split of the uplink functions and the downlink functions may be defined in various types by necessity between vendors, discussions on standard, and the like according to the trade-off described above.

In a first function split 255 in which the RU performs the RF function and the DU performs the PHY function, the first function split 255 does not substantially implement the PHY function in the RU, as an example, it may be referred to as Option 8. In a second function split 260, the RU performs iFFT conversion/CP insertion in the DL of the PHY function and FFT conversion/CP removal in the UL, and the DU performs the remaining PHY functions. As an example, the second function split 260 may be referred to as option 7-1. In a third function split 270a, the RU performs iFFT conversion/CP insertion in the DL of the PHY function and FFT conversion/CP removal and digital beamforming in the UL, and the DU performs the remaining PHY functions. For example, the third function split 270a may be referred to as Option 7-2x Category A. In a fourth function split 270b, the RU performs digital beamforming in both DL and UL, and the DU performs higher PHY functions after digital beamforming. For example, the fourth function split 270b may be referred to as Option 7-2x Category B. In a fifth function split 275, the RU performs RE mapping (or RE de-mapping) in both DL and UL, and the DU performs higher PHY functions after RE mapping (or RE de-mapping). For example, the fifth function split 275 may be referred to as option 7-2. In a sixth function split 280, the RU performs up to modulation (or demodulation) in both DL and UL, and the DU performs higher PHY functions after up to modulation (or demodulation). For example, the sixth function split 280 may be referred to as option 7-3. In a seventh function split 290, the RU performs up to encoding/scrambling (or decoding/de-scrambling) in both DL and UL, and the DU performs higher PHY functions after up to modulation (or demodulation). For example, the seventh function split 290 may be referred to as option 6.

According to an embodiment, when a large capacity signal processing is expected, such as FR 1 MMU, a function split (e.g., the fourth function split 270b) in a relatively high layer may be required to reduce fronthaul capacity. In addition, since a function split (e.g., the sixth function split 280) in a too high layer may complexify a control interface, and cause a burden on the implementation of the RU by including a plurality of PHY processing blocks in the RU, an appropriate function split may be required according to the arrangement and implementation method of the DU and the RU.

According to an embodiment, when the precoding of data received from the DU may not be processed (e.g., the RU's precoding capability is limited), the third function split 270a or lower function split (e.g., the second function split 260) may be applied. On the other hand, when the precoding of data received from the DU may be processed, the fourth function split 270b or more function splits (e.g., the sixth function split 280) may be applied.

Hereinafter, the higher-PHY may refer, for example, to physical layer processing processed in the DU of the fronthaul interface. For example, the higher-PHY may include FEC encoding/decoding, scrambling, and modulation/demodulation. Hereinafter, the lower-PHY may refer, for example, to physical layer processing processed in the RU of the fronthaul interface. For example, the lower-PHY may include FFT/iFFT, digital beamforming, physical random access channel (PRACH) extraction and filtering. However, the above-described criteria do not exclude embodiments through other function splits. The functional configuration, signaling, or operation described below may be applied to other function splits as well as the third function split 270a or the fourth function split 270b.

In various embodiments of the present disclosure, when transmitting a message between a DU (e.g., the DU 210 in FIG. 2A) and a RU (e.g., the RU 220 in FIG. 2A), the standards of eCPRI and O-RAN are described by way of non-limiting example as a fronthaul interface. An eCPRI header, an O-RAN header, and additional fields may be included in Ethernet payload of a message. Hereinafter, various example embodiments of the present disclosure are described using standard terms of eCPRI or O-RAN, but other expressions having equivalent meanings to each term may be substituted and used in various embodiments of the present disclosure.

As the fronthaul transport protocol, Ethernet and eCPRI, which are easy to share with the network, may be used. The eCPRI header and the O-RAN header may be included in the Ethernet payload. The eCPRI header may be located at a front end of the Ethernet payload. The contents of the eCPRI header may be as follows:

1) ecpriVersion (4 bits): This parameter indicates an eCPRI protocol version.
2) ecpriReserved (3 bits): This parameter is reserved for further use of eCPRI.
3) ecpriConcatenation (1 bit): This parameter indicates a time point at which eCPRI concatenation is in use.
4) ecpriMessage (1 byte): This parameter indicates a type of a service carried by a message type. For example, the parameter indicates an IQ data message, a real-time control data message, or a transport network delay measurement message.
5) ecpriPayload (2 bytes): This parameter indicates the byte size of a payload part of the eCPRI message.
6) ecpriRtcid/ecpriPcid (2 bytes): This parameter is an extended Antenna-carrie (eAxC) identifier (eAxC ID) and identifies a specific data flow related to each C-plane (ecpriRtcid) or U-plane (ecpriPcid) message.
7) ecpriSeqid (2 bytes): This parameter provides unique message identification and sequence at two levels. A first octet of the parameter is a sequence ID used to identify whether a sequence of messages in an eAxC message stream, and the sequence ID is used to identify that all messages is received and to rearrange out-of-order messages. A second octet of the parameter is a lower sequence ID. The lower sequence ID is used to identify a sequence when radio-transport-level (eCPRI or IEEE-1914.3) fragmentation occurs and implement rearranging.

The eAxC identifier (ID) includes a band and sector identifier ('BandSector_ID'), a component carrier identifier ('CC_ID'), a spatial stream identifier ('RU_Port_ID'), and a distributed unit identifier ('DU_Port_ID'). Bit allocation of the eAxC ID may be classified as follows:

1) DU_port ID: DU_port ID is used (e.g., different baseband cards), in order to distinguish processing units in O-DU. It is expected that the O-DU allocates bits for the DU_port ID and the O-RU attaches the same value to the UL U-plane message carrying the same sectionId data.
2) BandSector_ID: Aggregated cell identifier (classification of bands and sectors supported by O-RU).

3) CC_ID: CC_ID distinguishes carrier components supported by the O-RU.

4) RU_port ID: RU_port ID designates logic flows such as data layer or spatial stream, and logical flows such as signal channels that require separate numerologies (e.g., PRACH) or special antenna allocation such as SRS.

An application protocol of the fronthaul includes a control plane (C-plane), a user plane (U-plane), a synchronization plane (S-plane), and a management plane (M-plane).

The control plane may be configured to provide scheduling information and beamforming information through a control message. The control plane may refer, for example, to real-time control between the DU and the RU. The user plane may include IQ sample data transmitted between the DU and the RU. The user plane may include downlink data (IQ data or SSB/RS), uplink data (IQ data or SRS/RS), or PRACH data of a user. The weight vector of the above-described beamforming information may be multiplied by the user's data. The synchronization plane generally refers, for example, to a traffic between the DU and the RU with respect to a synchronization controller (e.g., IEEE Grand Master). The synchronization plane may be associated with timing and synchronization. The management plane may refer, for example, to non-real-time control between the DU and the RU. The management plane may be associated with initial setup, non-real time reset or reset, and non-real time report.

A message of the control plane, for example, the C-plane message, may be encapsulated based on a 2-layer header approach. A first layer may be configured with an eCPRI common header or an IEEE 1914.3 common header, including fields used to indicate a message type. A second layer is an application layer including fields necessary for control and synchronization. A section within the application layer defines a characteristic of U-plane data transmitted to or received from a beam having one pattern ID. Section types supported within the C-plane are as follows.

The section type may indicate the purpose of a control message transmitted in the control plane. For example, the purpose of each section type may be as follows:

1) sectionType = 0: Used to indicate resource blocks or symbols not used in the DL or the UL.

2) sectionType=1: Used for most DL/UL radio channels. Herein, 'most' indicates channels that do not require time or frequency offset, such as is required for mixed numerology channels.

3) sectionType=2: reserved for further use

4) sectionType=3: PRACH and mixed-numerology channel. Channels that require a time or frequency offset or differ from the nominal SCS value(s)

5) sectionType=4: reserved for further use

6) sectionType=5: UE scheduling information. Delivers UE scheduling information so that the RU may calculate real-time BF weight (O-RAN optional BF method)

7) sectionType=6: UE-specific channel information transmission. Periodically transmits UE channel information so that the RU may calculate real-time BF weight (O-RAN optional BF method)

8) sectionType=7: used for LAA support

The Open Radio Access Network (ORAN) may refer to an organization that designates and manages fronthaul interface standard between DU and RU according to various function split structures, and provides a standard interface in a split structure (e.g., 7-2x function split structure) to which Ethernet is applied.

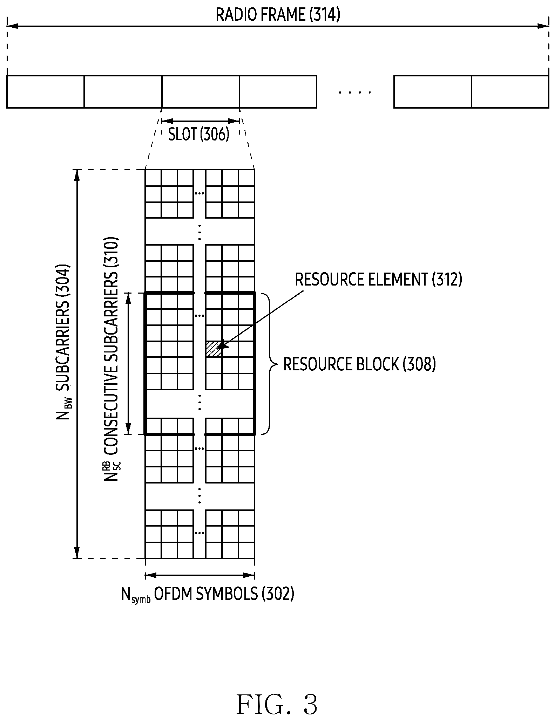

FIG. 3 is a diagram illustrating an example of a resource structure in a time region and a frequency region according to various embodiments. FIG. 3 illustrates a basic structure of a time-frequency region, which is a radio resource region in which data or control channels are transmitted in a downlink or uplink.

Referring to FIG. 3, a horizontal axis indicates a time region, and a vertical axis indicates a frequency region. The minimum transmission unit in the time region may be an OFDM symbol, and $N_{symb}$ OFDM symbols 302 gather to form one slot 306. Hereinafter, the OFDM symbol may be referred to as a symbol. The length of a subframe may be defined as 1.0 ms, and the length of a radio frame 314 may be defined as 10 ms. The minimum transmission unit in the frequency region is a subcarrier, and a carrier bandwidth configuring a resource grid is configured with $N_{BW}$ subcarriers 304.

The basic unit of resources in the time-frequency region is a resource element (hereinafter, RE) 312, which may be indicated by an OFDM symbol index and a subcarrier index. A resource block may include a plurality of resource elements. In the LTE system, a resource block (RB) (or physical resource block, (hereinafter, PRB)) is defined as $N_{symb}$ consecutive OFDM symbols in the time region and $N_{SC}^{RB}$ consecutive subcarriers in the frequency region. In the NR system, a resource block (RB) 308 may be defined as $N_{SC}^{RB}$ consecutive subcarriers 310 in the frequency region. One RB 308 includes $N_{SC}^{RB}$ REs 312 in the frequency axis. In general, the minimum transmission unit of data is RB, and the number of subcarriers is $N_{SC}^{RB} = 12$. The frequency region may include common resource block (CRB). The physical resource block (PRB) may be defined in a bandwidth part (BWP) on the frequency region. CRB and PRB number may be determined according to subcarrier spacing. A data rate may increase in proportion to the number of RBs scheduled for a terminal.

In the NR system, in a case of a frequency division duplex (FDD) system in which downlink and uplink are divided into frequencies and operated, downlink transmission bandwidth and uplink transmission bandwidth may be different from each other. The channel bandwidth indicates the radio frequency (RF) bandwidth corresponding to the system transmission bandwidth. [Table 1] shows a part of corresponding relationship among the system transmission bandwidth defined in the NR system at a frequency band lower than x GHz (e.g., frequency range (FR) 1 (310 MHz to 7125 MHz)), subcarrier spacing (SCS), and channel bandwidth. And [Table 2] shows a part of corresponding relationship among the transmission bandwidth defined in the NR system at a frequency band higher than y GHz (e.g., FR 2 (24250MHz - 52600MHz) or FR2-2 (52600MHz ~ 71000MHz)), the subcarrier spacing, and the channel bandwidth. For example, in the NR system having 100 MHz channel bandwidth as 30 kHz subcarrier spacing, the transmission bandwidth is configured with 273 RBs. In Table 1 and Table 2, N/A may be a bandwidth-subcarrier combination that is not supported by the NR system.

[Table 1]

| Channel bandwidth [MHz] | SCS | 5 | 10 | 20 | 50 | 80 | 100 |
|---|---|---|---|---|---|---|---|
| Transmission bandwidth configuration NRB | 15kHz | 25 | 52 | 106 | 207 | N/A | N/A |
| | 30kHz | 11 | 24 | 51 | 133 | 217 | 273 |
| | 60kHz | N/A | 11 | 24 | 65 | 107 | 135 |

[Table 2]

| Channel bandwidth [MHz] | SCS | 50 | 100 | 200 | 400 |
|---|---|---|---|---|---|
| Transmission bandwidth configuration NRB | 60kHz | 66 | 132 | 264 | N/A |
| | 120kHz | 32 | 66 | 132 | 264 |

For example, the number of a slot 306 configuring one subframe and a length of the slot 306 may vary according to the subcarrier spacing. The subcarrier spacing may be referred to as a numerology ($\mu$). That is, the subcarrier spacing, the number of slots included in the subframe, the length of the slots, and the length of the subframe may be variably configured. For example, when the subcarrier spacing (SCS) is 15 kHz in the NR communication system, one slot 306 may configure one subframe, and each the length of the slot 306 and the subframe may be 1ms. In addition, for example, when the subcarrier spacing is 30 kHz, two slots 306 may configure one subframe. In this case, the length of the slot is 0.5ms and the length of the subframe is 1ms.

On the other hand, the subcarrier spacing, the number of slots included in the subframe, the length of the slot, and the length of the subframe may be variably applied according to a communication system (e.g., LTE or NR). For example, in a case of the LTE communication system, the subcarrier spacing may be 15 kHz, and two slots may configure one subframe, and in this time, the length of the slot may be 0.5ms and the length of the subframe may be 1ms. For another example, in a case of the NR communication system, the subcarrier spacing ($\mu$) may be one of 15 kHz, 30 kHz, 60 kHz, 120 kHz, and the number of slots included in one subframe according to subcarrier spacing ($\mu$) may be 1, 2, 4, 8, and 16.

A base station (e.g., the base station 110 in FIG. 1) may allocate a resource for uplink transmission to a terminal (e.g., the terminal 120 in FIG. 1). Hereinafter, the resource for uplink transmission may be referred to as an uplink resource. The uplink resource may include a resource for a reference signal as well as uplink data. For example, the uplink data may include a physical uplink shared channel (PUSCH). For example, the reference signal may include sounding reference signal (SRS), which is a reference signal for estimating an uplink channel. For example, the SRS may be transmitted through a specific symbol among the uplink resources. For example, the SRS may be mapped to a specific symbol in one slot (e.g., the slot 306 of FIG. 3). For example, the specific symbols capable of being transmitted the SRS may be included within last six symbols within the slot. For example, the number of the specific symbols may be up to four. For example, the SRS may be transmitted on up to four symbols of the last six symbols in the slot.

Unlike a wireless communication system in which one base station 110 and one terminal 120 perform a communication, as shown in the example of FIG. 1, in a case of a wireless communication system in which a plurality of base stations and a plurality of terminals communicate, interference between adjacent cells (or neighbor cells) may occur. For example, settings of a first uplink resource allocated by a first base station among the plurality of base station to a first terminal among the plurality of terminals may differ from settings of a second uplink resource allocated by a second base station among the plurality of base stations to a second terminal among the plurality of terminals. The signal transmitted according to the first uplink resource may be affected by interference by the signal transmitted according to the second uplink resource. Accordingly, when the first base station receives the signal transmitted according to the first uplink resource, degradation of uplink throughput may occur due to an increase in block error rate (BLER) and degradation of a modulation and coding scheme (MCS). In other words, when the settings of the uplink resource between a specific cell (e.g., a cell in which the first base station supports the first terminal) and an adjacent cell (e.g., a cell in which the second base station supports the second terminal) are different, interference may occur significantly in different parts (e.g., specific symbols).

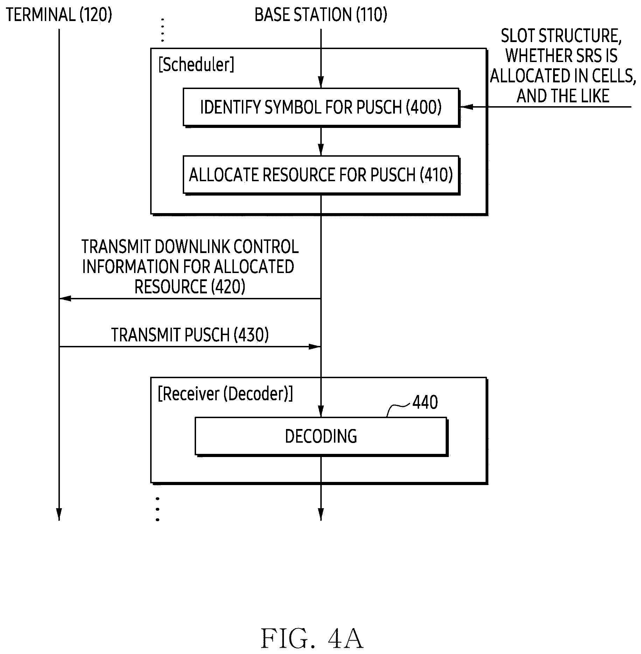

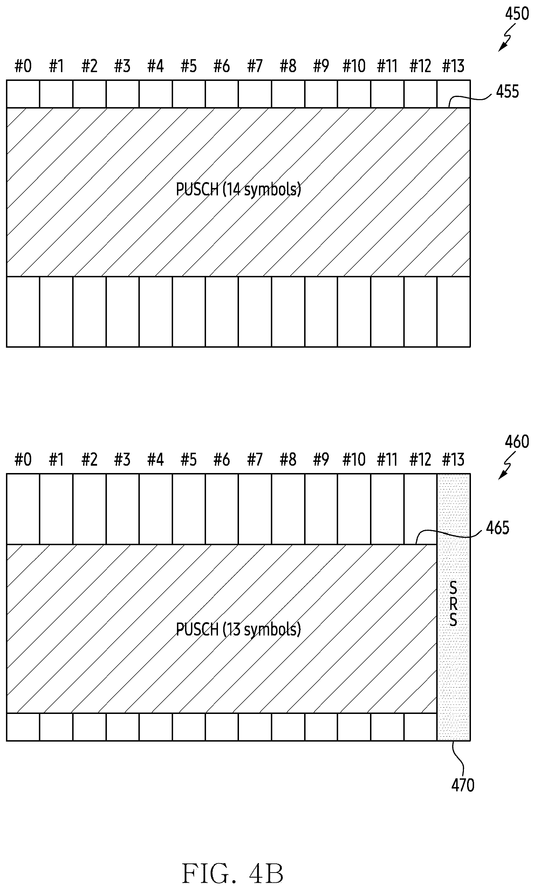

Hereinafter, FIGS. 4A and 4B illustrates an example of a method in which the base station 110 allocates uplink resources to the terminal 120 and receives an uplink signal, and differently configured uplink resources. For example, uplink resources configured differently may indicate a resource region corresponding to a specific symbol.

FIG. 4A is a signal flow diagram illustrating an example operation flow for allocating an uplink resource and receiving an uplink signal according to various embodiments. FIG. 4B is a diagram illustrating examples of an uplink resource allocation according to various embodiments.

The base station 110 of FIG. 4A may indicate an example of the base station 110 of FIG. 1. The terminal 120 of FIG. 4A may indicate an example of the terminal 120 of FIG. 1.

Referring to FIG. 4A, in operation 400, the base station 110 may identify a symbol for PUSCH. For example, the base station 110 may identify the number of symbols for the PUSCH based on at least one of a slot structure and whether to allocate SRS in the cell. For example, the PUSCH may be referred to as uplink data. For example, the slot structure may indicate symbols included in the slot and frequency regions related to the slot. The frequency region may indicate an activated bandwidth part among a plurality of bandwidth parts in the cell configured by the base station 110 for terminal 120. For example, a plurality of resource blocks (RBs) in the activated bandwidth part may be included. For example, whether to allocate the SRS in the cell may indicate information indicating whether to allocate SRS in the cell set by the base station 110 for terminal 120. For example, whether to allocate SRS in the cell may include information indicating whether to allocate SRS in the cell and information indicating a symbol to which the SRS is allocated when the SRS is allocated. For example, information indicating a symbol to which the SRS is allocated may indicate up to four symbols within a region of last six symbols in a specific time interval (e.g., slot). The base station 110 may identify symbols for PUSCH based on the structure of the slot and information indicating whether to allocate SRS in the cell.

In operation 410, the base station 110 may allocate resources for PUSCH. For example, the base station 110 may allocate identified resource region using symbols for the identified PUSCH and the activated bandwidth part (or bandwidth). For example, the base station 110 may allocate at least a part resources of the identified resource region. For example, the at least a part resources may indicate the at least one symbol in the identified resource region and a resource corresponding to at least one RB.

FIG. 4B may be referred to in relation to an example of resource allocation to symbols for PUSCH. FIG. 4B shows examples of time interval 450 including symbols for PUSCHs and time interval 460 including symbols for PUSCHs and symbols for SRS. Each of the time interval 450 and the time interval 460 may include 14 symbols.

For example, all 14 symbols included in the time interval 450 may be identified as symbols for PUSCH. Referring to an example of the time interval 450, the PUSCH may be transmitted on a resource region 455 identified based on the 14 symbols and a first frequency region. The first frequency region may include a plurality of RBs.

On the other hand, 13 of the 14 symbols included in the time interval 460 may be identified as symbols for PUSCH. For example, the 13 symbols may include a symbol (symbol #0) with an index, which indicates the symbol, of 0 to a symbol (symbol #12) with the index of 12. In addition, one symbol located last among 14 symbols included in the time interval 460 may be identified as a symbol for SRS (symbol #13). Referring to an example of the time interval 460, the PUSCH may be transmitted on a resource region 465 identified based on the 13 symbols and a second frequency region. The second frequency region may include a plurality of RBs, and the second frequency region may be different from the first frequency region. For example, the second frequency region may include RBs partially overlapping the first frequency region. However, embodiments of the present disclosure are not limited thereto. For example, the second frequency region may not overlap the first frequency region. In addition, for example, the second frequency region may be identical to the first frequency region. In addition, referring to the example of the time interval 460, the SRS may be transmitted on a resource region 470 identified based on symbol #13 and a third frequency region. For example, the third frequency region may indicate entire frequency region on the symbol #13. The entire frequency region may indicate entire RBs included in the activated bandwidth part.

In operation 420, the base station 110 may transmit downlink control information (DCI) for allocated resources. For example, the base station 110 may transmit the downlink control information, including information on at least a part of the allocated resources, to the terminal 120.

In operation 430, the terminal 120 may transmit PUSCH. For example, the terminal 120 may transmit the PUSCH to the base station 110 on at least a part of the resources identified based on the downlink control information. In operation 440, the base station 110 may perform decoding. For example, the base station 110 may perform the decoding for the received PUSCH.

Referring to FIGS. 4A and 4B, the base station 110 may identify symbols for the PUSCH. When SRS is not used within the cell, as in example of the time interval 450, the base station 110 may identify the entire symbols included in one time interval as symbols for the PUSCH, and allocate resource regions on the identified symbols for the PUSCH.

Referring to the described above, the base station 110 allocates uplink resources according to whether the operation of the SRS within the cell supported by the base station 110, and may not consider whether the operation of the SRS within a cell (e.g., a cell provided by another base station or another cell of the base station 110) adjacent to the cell. However, when allocating uplink resources with considering only whether the operation of the SRS of the cell supported by the base station 110, a reception performance for uplink data (e.g., PUSCH) transmitted from the terminal 120 through the allocated uplink resources may degraded. For example, it is assumed that the base station 110 allocates the resource region 455 in the time interval 450 to the terminal 120, and that another base station allocates the resource region 465 and the resource region 470 of the time interval 460 to another terminal (not shown) in a cell adjacent to the cell. In this case, interference may occur in a part of the uplink data transmitted by the terminal 120 on the resource region 455. For example, the part may indicate a resource region on symbol #13 among the resource regions 455. The interference may occur based on a signal transmitted by the other terminals through the resource region 465 and the resource region 470. According to influence of the interference, BLER for the uplink data may increase, and MCS may decrease as the BLER increases. In other words, while the SRS is transmitted through the resource region on symbol #13 in the adjacent cell, reception performance of the base station 110 with respect to the uplink data received from the terminal 120 may degraded. For example, in a case of uplink data transmitted through a resource region (e.g., a resource region like the resource region 465) excluding the resource region on symbol # 13 within the resource region 455, an average value of MCS index for the uplink data may be 22. On the other hand, in a case of uplink data transmitted through the resource region 455, the average value of the MCS index for the uplink data may be 13.

Hereinafter, interference strength of a symbol (hereinafter, interference symbol) capable of being transmitted a signal (hereinafter, interference signal), which may affect as an interference is identified, and an apparatus and a method for allocating uplink resources based on the identified interference strength are disclosed. In addition, according to an embodiment of the present disclosure, the apparatus and method may perform uplink resource allocation based on the identified interference strength by identifying reliability of the identified interference strength. In addition, according to an embodiment of the present disclosure, the apparatus and method may perform uplink resource allocation based on information related to interference signal without identifying interference strength. Therefore, the apparatus and method according to an embodiment of the present disclosure may improve uplink reception performance of the base station.

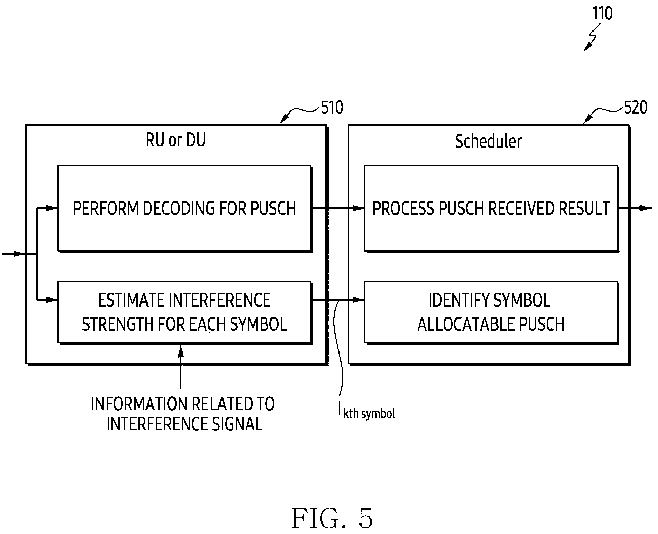

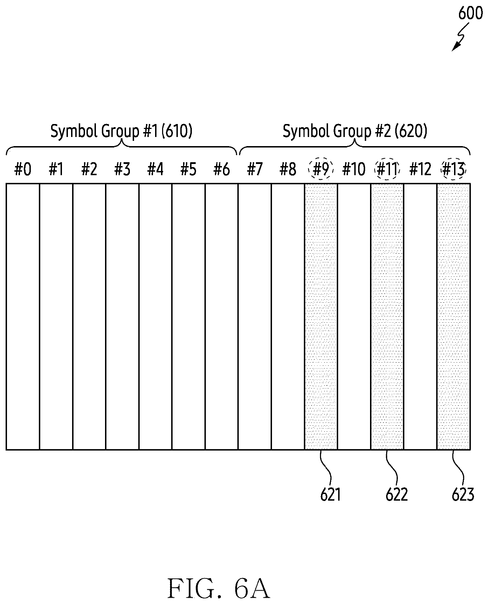

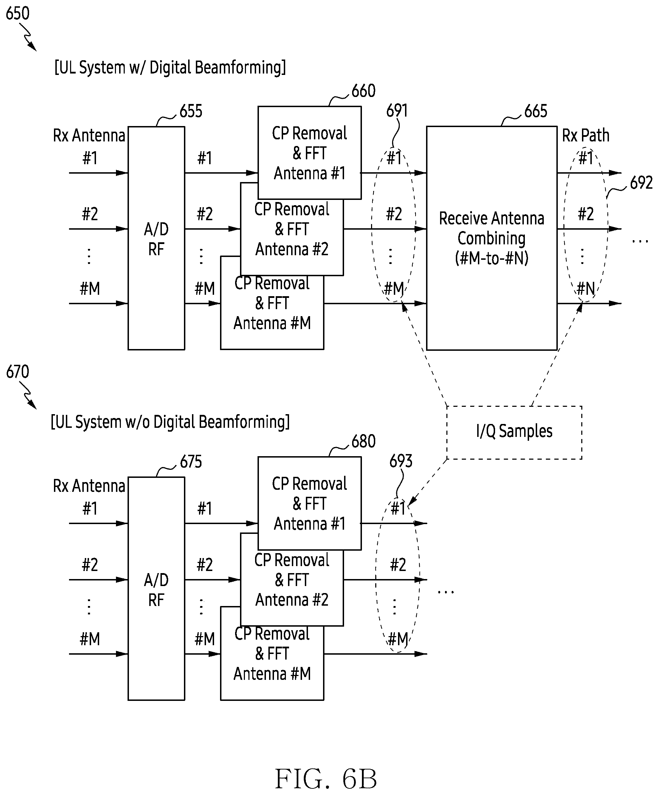

FIG. 5 is a diagram illustrating an example method of identifying an allocatable resource region based on interference strength for each symbol according to various embodiments. FIG. 6A is a diagram illustrating an example of a symbol capable of being transmitted an interference signal according to various embodiments. FIG. 6B is a diagram illustrating examples of an uplink signal for estimating interference strength for each symbol according to various embodiments.

Referring to FIG. 5, an example of a base station 110 performing the method is illustrated. For example, the base station 110 of FIG. 5 may indicate an example of the base station 110 of FIG. 1.

Referring to FIG. 5, the base station 110 may include RU or DU (RU/DU) 510 and a scheduler 520. For example, the RU may include at least a part of the RU 220 of FIG. 2A. For example, the RU may be referred to as a massive multiple input multiple output (MIMO) unit (MMU). For example, the DU may include at least a part of the DU 210 of FIG. 2A. For example, the scheduler 520 may include at least a part of a medium access control (MAC) layer of the base station 110. For example, the scheduler 520 may be included in the DU.

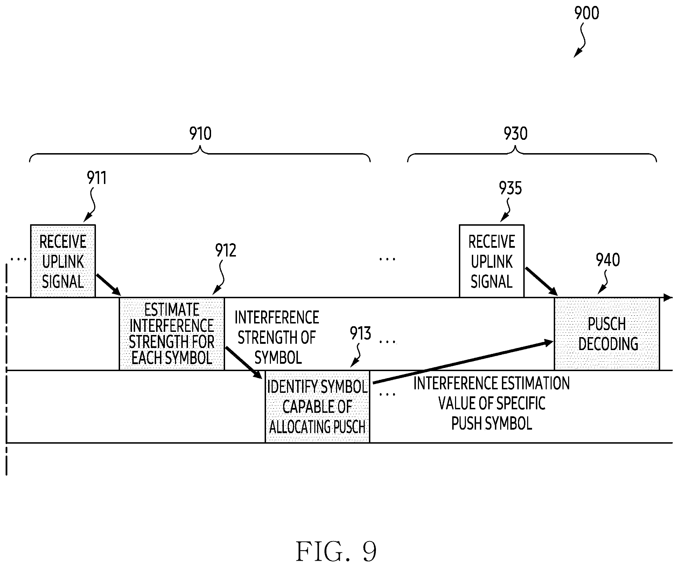

For example, the RU/DU 510 may decode a received uplink signal. For example, the base station 110 may receive an uplink signal from a terminal (e.g., the terminal 120 of FIG. 1). For example, the uplink signal may include uplink data PUSCH. The RU/DU 510 may decode the uplink data. For example, the decoding of the uplink data may be performed based on an estimation value of interference strength for each symbol identified to allocate the uplink data. A specific example related to this is described in FIG. 9 below.

For example, the RU/DU 510 may estimate interference strength for each symbol. For example, the RU/DU 510 may identify interference strength for each symbol of the received uplink signal, based on information related to interference signal. For example, information related to the interference signal may include information to indicate a location within time interval of a symbol (or interference symbol) capable of being transmitted interference signal. In order to explain information for indicating the location of the interference symbol, an example of FIG. 6A may be referred to below.

Referring to FIG. 6A, an example of a time interval 600 for an interference symbol capable of being transmitted an interference signal from among a plurality of symbols is illustrated. For example, the time interval 600 may indicate one slot. For example, the time interval 600 may include 14 symbols. The 14 symbols included in the time interval 600 may be divided into two groups. For example, the time interval 600 may include a first group 610 and a second group 620. For example, the first group 610 (group #1) may include seven symbols (symbol #0 to symbol #6). For example, the second group 620 (group #2) may include seven symbols (symbols #7 to #13). Interference signal may be transmitted in a part of symbols of the second group 620. For example, the interference signal may be transmittable on a first interference symbol 621 (symbol #9), a second interference symbol 622 (symbol #11), or a third interference symbol 623 (symbol #13). The number of symbols capable of being transmitted of the interference signal may be changed. For example, the number of symbols capable of being transmitted of the interference signal may be 1, 2, or 4.

For example, information for indicating a location of the interference symbol may indicate an index of the interference symbol. For example, the information may include information indicating the symbol #9, the symbol #11, or the symbol #13. In addition, information for indicating the location of the interference symbol may indicate an index of a group including the interference symbol. For example, the information may include information indicating group #2. The information for indicating the location of the interference symbol may be changed based on a cell operation policy of a communication service provider. FIG. 6A illustrates an example of the time interval 600 including two groups, but the embodiment of the present disclosure is not limited thereto. For example, the time interval 600 may include three or more groups. The time interval 600 may be configured such that two groups include different symbols.

Referring back to FIG. 5, based on information related to an interference signal as illustrated in FIG. 6A, the RU/DU 510 may identify interference strength for each symbol of the received uplink signal. For example, the RU/DU 510 may identify interference strength with respect to a symbol (interference symbol) capable of being transmitted the interference signal. An example of an uplink signal for identifying interference strength with respect to the interference symbol may be referred to in FIG. 6B below.

FIG. 6B illustrates an example of uplink reception systems 650 and 670 included in the base station 110. For example, the system 650 may illustrate an example of performing digital beamforming on an uplink signal. The system 670 may indicate an example in which digital beamforming is not performed on the uplink signal.

Referring to FIG. 6B, a system 650 may include analog to digital radio frequency (A/D RF) 655, cyclic prefix (CP) removal & fast Fourier transform (FFT) antennas 660, and receive antenna combining 665. Hereinafter, each of the CP removal & FFT antennas 660 may be referred to as a CP removal & FFT. The reception antenna combining 665 may be referred to as a digital beamforming unit. For example, A/D RF 655 may indicate a component for converting analog signals received through M Rx antennas into digital signals. For example, the A/DRF 655 may convert M analog signals into M digital signals. For example, the CP removal & FFT antennas 660 may include M CP removal & FFTs corresponding to M digital signals. Each of the CP removal & FFT antennas 660 may remove CP of received uplink signal and perform FFT conversion. M I/Q samples 691 may be generated by processing the CP removal & FFT antennas 660. The generated M I/Q samples 691 may be input to the reception antenna combining 665. For example, the receiving antenna combining 665 may combine M I/Q samples 691 into N I/Q samples 692 to correspond to N reception paths included in the system 650. The I/Q samples may be referred to as I/Q data.

In addition, referring to FIG. 6B, the system 670 may include an analog to digital radio frequency (A/D RF) 675, and cyclic prefix (CP) removal & fast Fourier transform (FFT) antennas 680. Hereinafter, each of the CP removal & FFT antennas 680 may be referred to as a CP removal & FFT. For example, A/D RF 675 may indicate a component for converting analog signals received through M Rx antennas into digital signals. For example, the A/D RF 675 may convert M analog signals into M digital signals. For example, CP removal & FFT antennas 680 may include M CP removal & FFT corresponding to M digital signal. Each of the CP removal & FFT antennas 680 may remove CP of received uplink signal and perform FFT conversion. M I/Q samples 693 may be generated by processing CP removal & FFT antennas 680. The I/Q samples may be referred to as I/Q data.

For example, I/Q samples 691, I/Q samples 692, and I/Q samples 693 may be used as an uplink signal for the base station 110 of FIG. 5 to estimate interference strength for each symbol. For example, the base station 110 including the uplink system 650 with digital beamforming may estimate (or identify) interference strength for each symbol, based on M I/Q samples 691 corresponding to M Rx antenna or N I/Q samples 692 corresponding to N reception paths. Alternatively, the base station 110 including the uplink system 670 without digital beamforming may estimate (or identify) interference strength for each symbol, based on M I/Q samples 693 corresponding to M Rx antennas.

To estimate interference strength for each symbol, the base station 110 may identify reception power based on I/Q samples. For example, the base station 110 may identify the reception power using received signal strength indicator (RSSI) of measured I/Q samples. The RSSI may include an RSSI for a frequency domain or an RSSI for a time domain. For example, the base station 110 may identify reception power for each Rx antenna (e.g., M I/Q samples 691 or M I/Q samples 693). In addition, for example, the base station 110 may identify reception power for each reception path (e.g., N I/Q samples 692). For example, a base station may identify reception power for each of resource element (RE) and symbol, based on a vector of RSSI measurement value of I/Q samples. For example, the vector for Rx antenna may be a vector including M elements. For example, the vector for reception paths may be a vector including N elements. Reception power according to reception path (or Rx antenna), RB, RE, and symbol of each of I/Q samples may be the same as following equation.

[Equation 1]

$$P_{u,v,k,r} = \left| i_{u,v,k,r} \right|^2 + \left| q_{u,v,k,r} \right|^2$$

The P may indicate reception power, the u may indicate an RE index, the v may indicate an RB index, the k may indicate a symbol index, the r may indicate an index of reception path (or Rx antenna), the i may indicate I data of I/Q sample, and the q may indicate Q data of I/Q sample. Referring to the equation, the reception power may be identified based on specific RE in the specific RB and I/Q sample in a specific symbol in association with a specific reception path.

In this case, reception power for specific RB may, for example, be defined as in the following equation.

[Equation 2]

$$P_{v,k,r} = \sum_u P_{u,v,k,r}$$

The P may indicate reception power, the u may indicate an RE index, the v may indicate RB index, the k may indicate a symbol index, and the r may indicate a reception path (or Rx antenna) index. Reception power for the specific RB may be calculated by summing the reception power for each of all REs in the specific RB.

Referring back to FIG. 5, the RU/DU 510 may identify reception power for a specific symbol, based on a specific RB (or specific RE) and a specific reception path (or Rx antenna). For example, the RU/DU 510 may identify reception power for a symbol (interference symbol) of capable of being transmitted an interference signal within a time interval. Alternatively, the RU/DU 510 may identify reception power for another symbol (e.g., a reference symbol) different from the interference symbol within the time interval. The reference symbol is a symbol incapable of being transmitted the interference signal, and may indicate a symbol to be compared (reference) for identifying interference strength of the interference symbol.

For example, the RU/DU 510 may identify reception power for interference symbol and reference symbol according to a state in which uplink data in RBs in the time interval is allocated. The RU/DU 510 may identify interference strength of interference symbol based on the identified reception power. For example, the state of the RBs may include RB to which uplink data is not allocated to all symbols (e.g., 14 symbols) of the time interval, RB to which uplink data is allocated to symbols other than interference symbol of the time interval, and RB to which uplink data is allocated to all symbols (e.g., 14 symbols) of the time interval.

In a case of RB to which uplink data is not allocated to all symbols of the time interval, the base station 110 may obtain uplink signal that does not include uplink data across all symbols in the time interval within the RB of frequency region. The base station 110 may identify interference symbol among all the symbols in the RB. For example, the base station 110 may identify interference symbol (symbol #k) based on information related to interference signal. In addition, the base station 110 may identify reference symbol different from the interference symbol among all the symbols in the RB. For example, the base station 110 may identify the reference symbol (symbol #z) (z≠k) within the time interval.

Reception power for the interference symbol identified by the base station 110 is same as following equation.

[Equation 3]

$$P_{v,k,r} = I_{v,k,r} + N_{v,k,r}$$

The v may indicate an index of the RB to which the uplink data is not allocated, the k may indicate an index of the interference symbol, the r may indicate an index of reception path (or Rx antenna), the $P_{v,k,r}$ may indicate reception power on the interference symbol for the RB and the reception path, the $I_{v,k,r}$ may indicate interference strength of the interference symbol for the RB and the reception path, and the $N_{v,k,r}$ may indicate magnitude of noise on the interference symbol for the RB and the reception path.

For example, the $I_{v,k,r}$ may indicate interference strength by interference signal (e.g., SRS) transmitted and received in neighbor cell of the cell. For example, the $N_{v,k,r}$ may indicate the sum of noise of channel in which the uplink signal is transmitted and received and interference size by uplink data (PUSCH) transmitted and received in the neighbor cell. Interference related to the neighbor cell may include interference signal of the neighbor cell and uplink data of the neighbor cell. For example, the base station 110 may identify interference by the interference signal capable of affecting with strong interference compared to uplink data of the neighbor cell, as interference strength of interference symbol.

Reception power for the reference symbol identified by the base station 110 may be the same as following equation.

[Equation 4]

$$P_{v,z,r} = N_{v,z,r}$$

The $P_{v,z,r}$ may indicate reception power on the reference symbol for the RB and the reception path, the v may indicate an index of the RB to which the uplink data is not allocated, the z may indicate an index of the reference symbol, the r may indicate an index of reception path (or Rx antenna), and the $N_{v,z,r}$ may indicate magnitude of noise on the reference symbol for the RB and the reception path.

For example, the $N_{v,z,r}$ may indicate the sum of noise of a channel through which the uplink signal is transmitted and received and interference size by uplink data (PUSCH) transmitted and received in the neighbor cell.

Referring to the above-described, the interference strength ($I_{v,k,r}$) on interference symbol (symbol #k) for the RB and the reception path may be estimated as shown in the following equation.

[Equation 5]

$$I_{v,k,r} = \mathbf{MAX}\{P_{v,k,r} - N_{v,k,r},\ 0\}$$
$$\approx \mathbf{MAX}\{P_{v,k,r} - N_{v,z,r},\ 0\}$$
$$= \mathbf{MAX}\{P_{v,k,r} - P_{v,z,r},\ 0\}$$

The $I_{v,k,r}$ may indicate interference strength of the interference symbol for the RB and the reception path, the $P_{v,k,r}$ may indicate reception power on the interference symbol for the RB and the reception path, the $N_{v,k,r}$ may indicate magnitude of noise on the interference symbol for the RB and the reception path, the $P_{v,z,r}$ may indicate reception power on the reference symbol for the RB and the reception path, and the $N_{v,z,r}$ may indicate the magnitude of noise on the reference symbol for the RB and the reception path.

Referring to the above-described equation, interference strength $I_{v,k,r}$ on interference symbol #k for the RB and the reception path may be identified based on a maximum value among a difference between the reception power $P_{v,k,r}$ and the magnitude of the noise $N_{v,k,r}$ and a reference power (e.g., 0). In this case, the difference between the reception power $P_{v,k,r}$ and the magnitude of the noise $N_{v,k,r}$ may be approximated to a difference between the reception power $P_{v,k,r}$ and the magnitude of the noise $N_{v,z,r}$. Considering the above-described equation, the magnitude of the noise $N_{v,z,r}$ may correspond to the reception power $P_{v,z,r}$. Therefore, the interference strength $I_{v,k,r}$ may be identified based on a maximum value among a difference between the reception power $P_{v,k,r}$ and the reception power $P_{v,z,r}$ and the reference power.

In the above-described example, the frequency region related to an uplink signal not including uplink data across all symbols in the time interval may include a bandwidth part activated within a cell set with respect to the terminal 120 in which the base station 110 transmits the uplink signal. The base station 110 may configure a plurality of bandwidth parts in the cell with respect to the terminal 120. For example, the plurality of bandwidth parts may include four bandwidth parts. Among the four bandwidth parts, one bandwidth part may be activated for transmitting the uplink signal.

In the above-described example, it is assumed that the reference symbol is one symbol for convenience of description, but embodiment of the present disclosure is not limited thereto. For example, when the reference symbol includes a plurality of symbols, the reception power $P_{v,z,r}$ may be identified based on a representative value of the reception power of each of the plurality of symbols. For example, the representative value may include an average, minimum, maximum, or intermediate value with respect to reception power of each of the plurality of symbols.

In a case of RB in which uplink data is allocated to symbols other than interference symbol of the time interval, the base station 110 may obtain an uplink signal, including uplink data across the symbols other than the interference symbol within the time interval, in the RB of frequency region. The base station 110 may identify the interference symbol in the RB. For example, the base station 110 may identify interference symbol #k based on information related to interference signal. In addition, the base station 110 may identify a reference symbol to which a reference signal is allocated among the symbols in the RB. For example, the reference signal may include a demodulation reference signal (DMRS). For example, the base station 110 may identify the reference symbol #z (z≠k) in the time interval. The frequency region may include a bandwidth part activated within a cell set with respect to the terminal 120 in which the base station 110 transmits the uplink signal. The base station 110 may configure a plurality of bandwidth parts in the cell with respect to the terminal 120. For example, the plurality of bandwidth parts may include four bandwidth parts. Among the four bandwidth parts, one bandwidth part may be activated for transmitting the uplink signal.

Reception power for the interference symbol identified by the base station 110 may be the same as following equation.

[Equation 6]

$$P_{v,k,r} = I_{v,k,r} + N_{v,k,r}$$

The v may indicate an index of the RB to which the uplink data is not allocated, the k may indicate an index of the interference symbol, the r may indicate an index of a reception path (or Rx antenna), the $P_{v,k,r}$ may indicate reception power on the interference symbol for the RB and the reception path, the $I_{v,k,r}$ may indicate interference strength of the interference symbol for the RB and the reception path, and the $N_{v,k,r}$ may indicate magnitude of noise on the interference symbol for the RB and the reception path.

For example, the $I_{v,k,r}$ may indicate interference strength by an interference signal (e.g., SRS) transmitted and received in a neighbor cell of the cell. For example, the $N_{v,k,r}$ may indicate sum of noise of a channel in which the uplink signal is transmitted and received and interference size by uplink data (PUSCH) transmitted and received in the neighbor cell. Interference related to the neighbor cell may include an interference signal of the neighbor cell and uplink data of the neighbor cell. For example, the base station 110 may identify Interference by the interference signal, which may function as strong interference compared to uplink data of the neighbor cell, as interference strength of an interference symbol.

Magnitude of noise with respect to the reference symbol identified by the base station 110 may be estimated based on the reference signal. The base station 110 may identify magnitude of noise $N_{v,z,r}$ on the reference symbol for the RB and the reception path based on the reference signal. For example, the base station 110 may identify transmission power based on a previously known signal at DMRS symbol in the reference signal and an actual measured signal. For example, the transmission power may be identified using correlation between the previously known signal and the actual measured signal. The base station 110 may identify a value obtained by subtracting the transmission power from the reception power for the actual measured DMRS symbol as magnitude of the noise $N_{v,z,r}$.

Referring to the above-described, interference strength $I_{v,k,r}$ on interference symbol #k for the RB and the reception path may be estimated as in the following equation.

[Equation 7]

$$I_{v,k,r} = \mathbf{MAX}\{P_{v,k,r} - N_{v,k,r},\ 0\}$$
$$\approx \mathbf{MAX}\{P_{v,k,r} - N_{v,z,r},\ 0\}$$

Referring to the above-described equation, interference strengths $I_{v,k,r}$ on the interference symbol #k for the RB and the reception path may be identified based on a maximum value among a difference between the reception power $P_{v,k,r}$ and the magnitude of the noise $N_{v,k,r}$, and a reference power (e.g., 0). In this case, the difference between the reception power $P_{v,k,r}$ and the magnitude of the noise $N_{v,k,r}$ may be approximated to a difference between the reception power ($P_{v,k,r}$) and the magnitude of the noise ($N_{v,z,r}$).

In the above-described example, it is assumed that the reference symbol is one symbol for convenience of description, but embodiment of the present disclosure is not limited thereto. For example, when the reference symbol includes a plurality of symbols, the received power $P_{v,z,r}$ may be identified based on a representative value of reception power of each of the plurality of symbols. For example, the representative value may include an average, minimum, maximum, or intermediate value for reception power of each of the plurality of symbols.

In a case of RB in which uplink data is allocated to all symbols in the time interval, the base station 110 may obtain an uplink signal including uplink data across all symbols in the time interval, within the RB of frequency region. The base station 110 may identify an interference symbol among all the symbols in the RB. For example, the base station 110 may identify interference symbol #k based on information related to interference signal. In addition, the base station 110 may identify a reference symbol other than the interference symbol among all the symbols in the RB. For example, the base station 110 may identify the reference symbol #z (z≠k) within the time interval. The frequency region may include a bandwidth part activated within a cell set with respect to the terminal 120 in which the base station 110 transmits the uplink signal. The base station 110 may configure a plurality of bandwidth parts in the cell with respect to the terminal 120. For example, the plurality of bandwidth parts may include four bandwidth parts. Among the four bandwidth parts, one bandwidth part may be activated for transmitting the uplink signal.

Reception power for the interference symbol identified by the base station 110 may be the same as following equation.

[Equation 8]

$$P_{v,k,r} = I_{v,k,r} + N_{v,k,r} + W_{v,k,r}$$

The v may indicate an index of the RB to which the uplink data is allocated, the k may indicate an index of the interference symbol, the r may indicate an index of a reception path (or Rx antenna), the $P_{v,k,r}$ may indicate reception power on the interference symbol for the RB and the reception path, the $I_{v,k,r}$ may indicate interference strength of the interference symbol for the RB and the reception path, the $N_{v,k,r}$ may indicate magnitude of noise on the interference symbol for the RB and the reception path, and the $W_{v,k,r}$ may indicate reception power of uplink data (PUSCH) on the interference symbol for the RB and the reception path.

For example, the $I_{v,k,r}$ may indicate interference strength by an interference signal (e.g., SRS) transmitted and received in a neighbor cell of the cell. For example, the $N_{v,k,r}$ may indicate the sum of noise of a channel in which the uplink signal is transmitted and received and interference size by uplink data (PUSCH) transmitted and received in the neighbor cell. For example, the $W_{v,k,r}$ may indicate reception power of uplink data allocated on the interference symbol in the cell. Interference related to the neighbor cell may include an interference signal of the neighbor cell and uplink data of the neighbor cell. For example, the base station 110 may identify interference by the interference signal, which may function as strong interference compared to the uplink data of the neighbor cell, as interference strength of an interference symbol.

Reception power for the reference symbol identified by the base station 110 may be the same as following equation.

[Equation 9]

$$P_{v,z,r} = N_{v,z,r} + W_{v,z,r}$$

The $P_{v,z,r}$ may indicate reception power on the reference symbol for the RB and the reception path, the v may indicate an index of the RB to which the uplink data is allocated, the z may indicate an index of the reference symbol, the r may indicate an index of a reception path (or Rx antenna), the $N_{v,z,r}$ may indicate magnitude of noise on the reference symbol for the RB and the reception path, and the $W_{v,z,r}$ may indicate reception power of uplink data (PUSCH) on the reference symbol for the RB and the reception path.

For example, the $N_{v,z,r}$ may indicate sum of a magnitude of noise of a channel in which the uplink signal is transmitted and received and interference size by uplink data (PUSCH) transmitted and received in the neighbor cell. For example, the $W_{v,z,r}$ may indicate reception power of uplink data (PUSCH) allocated on the interference symbol in the cell. For example, the symbol #z for the $W_{v,z,r}$ may be a symbol in which the reference signal (e.g., DMRS) is allocated rather than the uplink data. For example, when reception power of the reference signal corresponds to the reception power $W_{v,z,r}$ of the uplink data, the symbol to which the reference signal is mapped instead of the uplink data may be used as the symbol #z.

Referring to the above-described, interference strength $I_{v,k,r}$ on interference symbol #k for the RB and the reception path may be estimated as the following equation.

[Equation 10]

$$I_{v,k,r} = \mathbf{MAX}\{P_{v,k,r} - N_{v,k,r} - W_{v,k,r},\ 0\}$$
$$\approx \mathbf{MAX}\{P_{v,k,r} - N_{v,z,r} - W_{v,z,r},\ 0\}$$
$$= \mathbf{MAX}\{P_{v,k,r} - P_{v,z,r},\ 0\}$$

The $I_{v,k,r}$ may indicate interference strength of the interference symbol for the RB and the reception path, the $P_{v,k,r}$ may indicate reception power on the interference symbol for the RB and the reception path, the $N_{v,k,r}$ may indicate magnitude of noise on the interference symbol for the RB and the reception path, the $W_{v,k,r}$ may indicate reception power of uplink data (PUSCH) on the interference symbol for the RB and the reception path, the $P_{v,z,r}$ may indicate reception power on the reference symbol for the RB and the reception path, the $N_{v,z,r}$ may indicate magnitude of noise on the reference symbol for the RB and the reception path, and the $W_{y,z,r}$ may indicate reception power of uplink data (PUSCH) on the reference symbol for the RB and the reception path.

Referring to the described-above equation, interference strengths $I_{v,k,r}$ on interference symbol #k for the RB and the reception path may be identified based on a maximum value among a value obtained by subtracting sum of the magnitude of noise $N_{v,k,r}$ and the reception power $W_{v,k,r}$ from the reception power $P_{v,k,r}$, and a reference power (e.g., 0). In this case, the value obtained by subtracting sum of the magnitude of noise $N_{v,k,r}$ and the reception power $W_{v,k,r}$ from the reception power $P_{v,k,r}$ may be approximated to a value obtained by subtracting the magnitude of noise $N_{v,z,r}$ and the reception power $W_{v,z,r}$ from the reception power $P_{v,k,r}$. Considering the above-described equation, the sum of the magnitude of noise $N_{v,z,r}$ and the reception power $W_{v,z,r}$ may correspond to the reception power $P_{v,z,r}$. Therefore, the interference strength $I_{v,k,r}$ may be identified based on a maximum value among a difference between the reception power $P_{v,k,r}$ and the reception power $P_{v,z,r}$ and the reference power.

In the above-described example, it is assumed that the reference symbol is one symbol for convenience of description, but embodiment of the present disclosure is not limited thereto. For example, when the reference symbol includes a plurality of symbols, the received power $P_{v,z,r}$ may be identified based on a representative value of reception power of each of the plurality of symbols. For example, the representative value may include an average, minimum, maximum, or intermediate value for reception power of each of the plurality of symbols.

Referring to the above-described, RU/DU 510 may identify interference strength $I_{v,k,r}$ of the interference symbol for a specific RB and a specific reception path, based on the reception power of the interference symbol and the reception power for the reference symbol. RU/DU 510 may identify interference strength $I_k$ of the interference symbol based on interference strength $I_{v,k,r}$ of the interference symbol for a specific RB and a specific reception path. Interference strength $I_k$ of the interference symbol may be defined using the following equation.

[Equation 11]

$$I_k = E_{v,r}[I_{v,k,r}]$$

The $I_k$ may indicate interference strength of the interference symbol, the $I_{v,k,r}$ may indicate interference strength of the interference symbol for the RB and the reception path, the v may indicate an index of the RB, the k may indicate an index of the interference symbol, the r may indicate an index of the reception path (or Rx antenna), and the $E_{v,r}$ may indicate an average operation for all RBs and all reception paths related to the interference symbol.

Referring to the above-described, interference strength $I_k$ of the interference symbol may be identified as an average value of sum of all RBs and all reception paths with respect to the interference strength $I_{v,k,r}$ of the interference symbol for the RB and the reception path. In this case, for one slot, interference strength $I_{v,k,r}$ of the interference symbol for the RB and the reception path may be identified based on a representative value of the interference strength $I_{v,k,r}$ for at least one domain of time or frequency. For example, the representative value may include an average, minimum, maximum, or intermediate value of the interference strength $I_{v,k,r}$ with respect to at least one domain of time or frequency. In addition, interference strength $I_{v,k,r}$ of the interference symbol for the RB and the reception path may be identified based on a representative value calculated with respect to a plurality of slots. Interference strength $I_k$ of the interference symbol may be identified based on the interference strength $I_{v,k,r}$ according to the representative value.

For example, interference strength $I_k$ of the interference symbol may be updated based on a specified period or a specific event. For example, interference strength $I_k$ of the interference symbol may be identified, for every specified period (e.g. 1 minute), based on interference strength $I_{v,k,r}$ of the interference symbol for the RB and the reception path. In addition, for example, in response to identifying the specific event, interference strength $I_k$ of the interference symbol may be identified based on interference strength $I_{v,k,r}$ of the interference symbol for the RB and the reception path. For example, the specific event may indicate a case in which reliability of the interference strength $I_{v,k,r}$ is not guaranteed. For example, the event may include at least one of identifying, that a time difference between timing (e.g., first timing) of estimating the interference strength and timing of performing scheduling (e.g., second timing) is greater than or equal to a threshold time, that a modulation and coding scheme (MCS) is less than or equal to threshold MCS, that a block error rate (BLER) is greater than or equal to threshold BLER, or that the number of resource blocks to be allocated is greater than or equal to a threshold resource block.

For example, when estimation of interference strength $I_{v,k,r}$ of the interference symbol for the RB and the reception path is expected to be inaccurate, interference strength $I_k$ of the interference symbol may be identified based on remainder excluding a value of the interference strength $I_{v,k,r}$ expected to be inaccurate. For example, the value expected to be inaccurate may indicate the interference strength $I_{v,k,r}$ estimated for RB to which uplink data is allocated to all symbols within the time interval. Due to reception power of the uplink data in the RB, estimation accuracy of the interference strength $I_{v,k,r}$ may be inferior to another case (e.g., a case in which uplink data within all symbols is not allocated, or a case in which uplink data within an interference symbol is not allocated).

For example, a value of interference strength $I_k$ of the interference symbol may be represented through absolute size (unit: [dBm]), relative size (unit: [dB]), and offset for the absolute size or the relative size. For example, the relative size may be represented as a value relative to magnitude of noise estimated in the interference symbol #k. For example, the offset may indicate a constant value to be added or subtracted from the absolute size or the relative size.

Referring to FIG. 5, RU/DU 510 may transmit interference strength $I_k$ of the identified interference symbol to a scheduler 520.

For example, the scheduler 520 may process a reception result for the uplink data PUSCH based on the result of the decoding. For example, when decoding for the uplink data is successful, the scheduler 520 may deliver data packet for the uplink data to higher layer (e.g., RLC, PDCP). For example, when decoding for the uplink data fails, the scheduler 520 may perform a re-transmission procedure (e.g., HARQ).

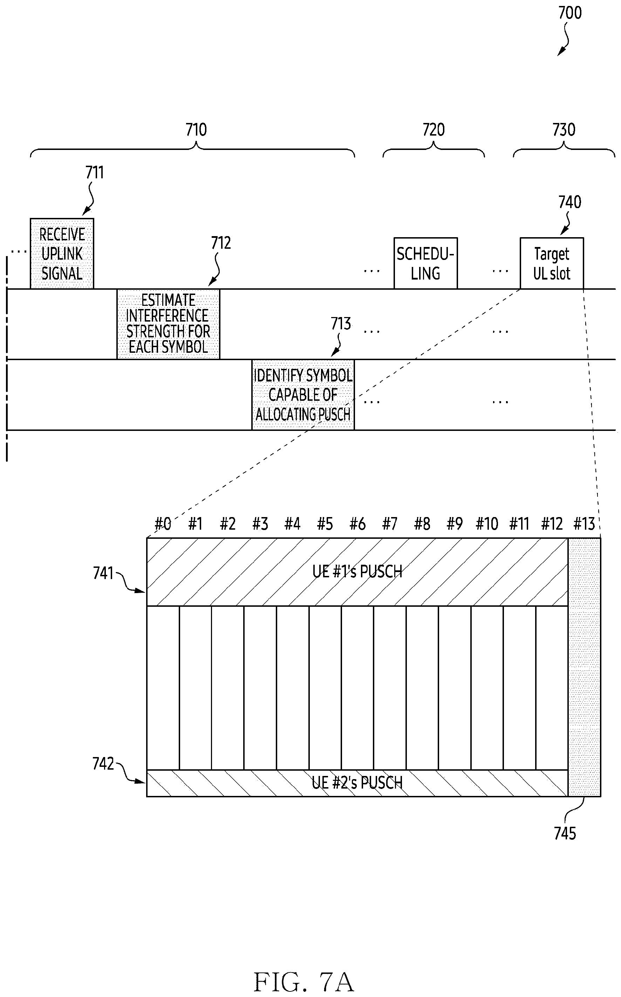

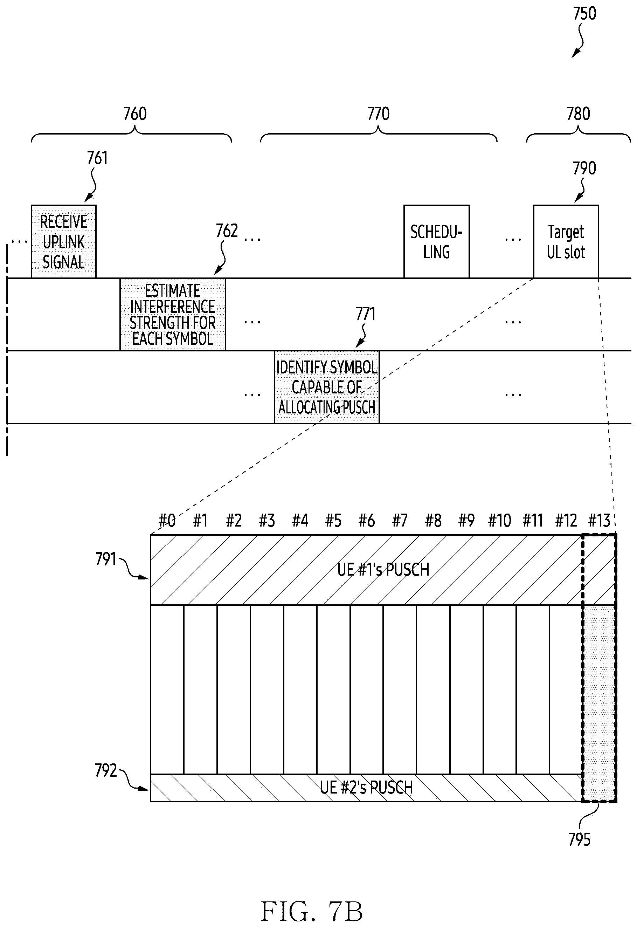

For example, the scheduler 520 may identify an allocatable symbol for a transmission of uplink data, based on interference strength $I_k$ of the interference symbol obtained from the RU/DU 510. For example, when the interference strength $I_k$ is greater than or equal to threshold strength, the scheduler 520 may identify the interference symbol as a symbol incapable of allocating the uplink data. For example, when the interference strength $I_k$ is less than the threshold strength, the scheduler 520 may identify the interference symbol as a symbol capable of allocating the uplink data. In other words, transmission of the uplink data on a bandwidth configured for a user equipment within a symbol having the index of a slot to be scheduled based on the interference strength $I_k$ is greater than or equal to threshold strength, may be disabled. In addition, transmission of the uplink data on at least portion of the bandwidth configured for a user equipment within a symbol having the index of a slot to be scheduled based on the interference strength $I_k$ is greater than or equal to threshold strength, may be enabled. For example, the threshold strength may be set to a fixed value. Alternatively, the threshold strength may be set to a variable value based on at least one of a level of modulation and coding scheme (MCS), power headroom (PH), or the number of allocatable RB. For example, the threshold strength set to the fixed value may be applied to all terminals in the cell, regardless of the MCS level or RB. Details related to this will be described in greater detail with reference to FIG. 7A below. In addition, for example, the threshold strength set to the variable value may be applied differently to each of terminals in the cell, based on the MCS level or RB of a target terminal. Details related to this will be described in greater detail with reference to FIG. 7B below.

In FIG. 5, an operation in which RU/DU 510 performs decoding for uplink data and estimates interference strength for each symbol may include an operation in which RU performs decoding and estimates interference strength, an operation in which DU performs decoding and estimates interference strength, and an operation in which RU estimates interference strength and DU performs decoding. For example, decoding performed by RU/DU 510 and estimation of interference strength may be determined according to function split of the base station 110 described in FIG. 2B. Hereinafter, considering the convenience of explanation, decoding performed by the base station 110 including RU and DU and estimation of interference strength will be described as a reference.

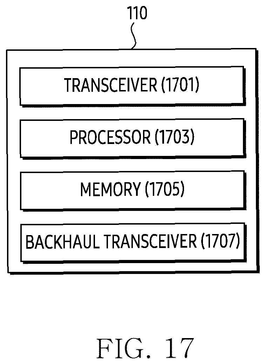

In addition, FIG. 5 describes operations performed by each of the RU/DU 510 of the base station 110 and the scheduler 520, but embodiments of the present disclosure is not limited thereto. For example, the operations may be performed by a processor (e.g., the processor 1703 of FIG. 17) of the base station 110 controlling the components of the base station 110. In other words, at least one operation of FIG. 5 may be performed by the processor of the base station 110.

FIG. 7A is a diagram illustrating an example method of identifying an allocatable resource region in a time region at which an uplink signal is received according to various embodiments.

A method of FIG. 7A may be performed by the base station 110 of FIG. 5.

Referring to FIG. 7A, an example 700 illustrates an example of a method in which the base station 110 identifies an allocatable resource region in a first time region 710 receiving an uplink signal. The first time region 710 receiving the uplink signal may be referred to as a reception region.

Referring to the example 700, the base station 110 may receive an uplink signal at first time 711 within the first time region 710. For example, the uplink signal may be a signal transmitted by a terminal (e.g., the terminal 120 in FIG. 1) on a cell provided by the base station 110. For example, the uplink signal may include uplink data PUSCH. The uplink signal may be a signal transmitted on the first time interval. For example, the first time interval may indicate one slot including a plurality of first symbols. For example, the plurality of first symbols may be configured with 14 symbols. The first time interval may correspond to the first time 711.

For example, the base station 110 may estimate interference strength for each symbol of the first time interval, at second time 712 within the first time region 710. For example, the interference strength for each symbol may be identified based on reception power of a symbol (e.g., a first interference symbol) capable of being transmitted interference signal and reception power of a reference symbol different from the first interference symbol. For example, the interference strength for each symbol may be referred to as interference strength ($I_k$) of interference symbol.

For example, the base station 110 may identify a symbol capable of allocating PUSCH at third time 713 within the first time region 710. For example, the base station 110 may identify whether uplink data is allocated to a second interference symbol by comparing interference strength $I_k$ of the first interference symbol with threshold strength. For example, when the interference strength $I_k$ of the first interference symbol is greater than or equal to the threshold strength, the base station 110 may identify that uplink data is not allocated to the second interference symbol. For example, the second interference symbol may indicate a symbol identified based on an index for indicating the first interference symbol among a plurality of second symbols in a second time interval 740 that is a target of uplink resource allocation. For example, an index of the second interference symbol may correspond to an index for indicating the first interference symbol. On the other hand, when the interference strength $I_k$ of the first interference symbol is less than the threshold strength, the base station 110 may be identified to allocate uplink data to the second interference symbol. The second interference symbol may be determined as time resources of uplink resources to be allocated.

For example, in response to identifying that uplink data is not allocated to the second interference symbol, the base station 110 may identify the entire resource region of the plurality of second symbols (e.g., 14 symbols) of the second time interval 740. For example, the second time interval 740 may indicate an uplink slot that is a target of resource allocation to be received within the third time region 730. For example, the third time region 730 may be referred to as a reception region. The second time interval 740 may include 14 symbols. For example, the entire resource region may indicate a resource region identified using the plurality of second symbols and bandwidth. The bandwidth may include a bandwidth part activated within a cell set by the base station 110 for the terminal 120 transmitting the uplink signal. The base station 110 may configure a plurality of bandwidth parts in the cell for the terminal 120. For example, the plurality of bandwidth parts may include four bandwidth parts. Among the four bandwidth parts, one bandwidth part may be activated for transmitting the uplink signal.

For example, the base station 110 may identify a second resource region in response to identifying that uplink data is allocated to the second interference symbol. For example, the second resource region may indicate a resource region distinguished from the first resource region of the second interference symbol in the entire resource region. In other words, the second resource region may be different from the first resource region in the entire resource region, and indicate a resource region capable of allocating uplink data. The first resource region may indicate a resource region identified using the second interference symbol and the bandwidth. The second resource region may indicate a resource region identified using symbols different from the second interference symbol among the plurality of second symbols and the bandwidth.

For example, when identifying a symbol capable of allocating uplink data in the first time region 710 rather than the second time region 720, the base station 110 may identify a symbol allocatable for all terminals based on one threshold strength. The one threshold strength may be set to a fixed value applied to all terminals regardless of the MCS level or RB.

For example, the base station 110 may allocate uplink resources for the second time interval 740 of the third time region 730 within the second time region 720, based on identified entire resource region or the second resource region. For example, the second time region 720 may be referred to as a scheduling region.

Referring to the enlarged part for the second time interval 740, the base station 110 may identify a first resource region 745, based on symbol # 13, which is the second interference symbol, and the bandwidth. When it is identified that uplink data will not be allocated for the second interference symbol, the base station 110 may allocate resources of the second resource region except for the first resource region 745 in the entire resource region of the second time interval 740 for uplink data. For example, the base station 110 may allocate first resources 741 for the first terminal on the cell and second resources 742 for the second terminal on the cell. Each of the first resources 741 and the second resources 742 may be included in the second resource region. For example, the second resource region may indicate a resource region identified based on symbols (symbol #0 to symbol #12) and the bandwidth. Each of the first resources 741 and the second resources 742 may include at least a part of the entire RB of the bandwidth.

Referring to the above-described, when an allocatable symbol for uplink data is identified within the first time region 710, the base station 110 may identify the allocatable symbol and the first resource region 745 based on one threshold strength set to a fixed value. Accordingly, regardless of the terminal, the first resource region 745 of the entire resource region may be excluded from the resource region for uplink data.

FIG. 7B is a diagram illustrating an example method of identifying an allocatable resource region in a time region for performing scheduling according to various embodiments.

The method of FIG. 7B may be performed by the base station 110 of FIG. 5.

Referring to FIG. 7B, example 750 illustrates an example of a method in which the base station 110 identifies an allocatable resource region in a second time region 770 performing scheduling. The second time region 770 performing the scheduling may be referred to as a scheduling section.

Referring to example 750, the base station 110 may receive an uplink signal at first time 761 within a first time region 760. The first time region 760 may indicate a time region receiving uplink signal. The first time region 760 may be referred to as a reception region. For example, the uplink signal may be a signal transmitted by a terminal (e.g., the terminal 120 of FIG. 1) on a cell provided by a base station 110. For example, the uplink signal may include uplink data PUSCH. The uplink signal may be a signal transmitted on the first time interval. For example, the first time interval may indicate one slot including a plurality of first symbols. For example, the plurality of first symbols may include 14 symbols. The first time interval may correspond to the first time 761.

For example, the base station 110 may estimate interference strength for each symbol of the first time interval at second time 762 within the first time region 760. For example, the interference strength for each symbol may be identified based on reception power of the symbol (e.g., the first interference symbol) capable of being transmitted the interference signal and the reception power of a reference symbol different from the first interference symbol. For example, the interference strength for each symbol may be referred to as interference strength $I_k$ of interference symbol.

For example, the base station 110 may identify a symbol capable of allocating PUSCH at third time 771 within the second time region 770. For example, the base station 110 may store interference strength $I_k$ of the first interference symbol identified at the second time 762 within the first time region 760. The base station 110 may identify a symbol capable of allocating PUSCH at the third time 771 within the second time region 770, based on the stored interference strength $I_k$ of the first interference symbol.

For example, the base station 110 may identify whether uplink data is allocatable to the second interference symbol, by comparing the interference strength $I_k$ of the first interference symbol and threshold strength. For example, when the interference strength $I_k$ of the first interference symbol is greater than or equal to the threshold strength, the base station 110 may identify that uplink data is not allocated to the second interference symbol. For example, the second interference symbol may indicate a symbol identified based on an index for indicating the first interference symbol among a plurality of second symbols in a second time interval 790 that is the target of uplink resource allocation. For example, an index of the second interference symbol may correspond to an index for indicating the first interference symbol. On the other hand, the base station 110 may identify that uplink data will be allocated to the second interference symbol when the

interference strength $I_k$ of the first interference symbol is less than the threshold strength. The second interference symbol may be determined as time resources of uplink resources to be allocated.

For example, in response to identifying that uplink data is not allocated to the second interference symbol, the base station 110 may identify an entire resource region of the plurality of second symbols (e.g., 14 symbols) of the second time interval 790. For example, the second time interval 790 may indicate an uplink slot that is a target of resource allocation to be received in the third time region 780. For example, the third time region 780 may be referred to as a reception region. The second time interval 790 may comprise 14 symbols. For example, the entire resource region may indicate a resource region identified using the plurality of second symbols and bandwidth. The bandwidth may include a bandwidth part activated within a cell set by the base station 110 with respect to the terminal 120 transmitting the uplink signal. The base station 110 may configure a plurality of bandwidth parts in the cell with respect to the terminal 120. For example, the plurality of bandwidth parts may include four bandwidth parts. Among the four bandwidth parts, one bandwidth part may be activated for transmitting the uplink signal.

For example, in response to identifying allocating uplink data to the second interference symbol, the base station 110 may identify the second resource region. For example, the second resource region may indicate a resource region distinguished from the first resource region of the second interference symbol in the entire resource region. In other words, the second resource region may indicate a resource region, which is different from the first resource region in the entire resource region and capable of allocating uplink data. The first resource region may indicate a resource region identified using the second interference symbol and the bandwidth. The second resource region may indicate a resource region identified using symbols different from the second interference symbol among the plurality of second symbols and the bandwidth.

In the example of FIG. 7B, when identifying a symbol capable of allocating uplink data in the second time region 770 rather than the first time region 760, the base station 110 may identify a symbol allocatable for each terminal based on a plurality of threshold strengths. Each of the plurality of threshold strengths may be set to a variable value identified based on a level of MCS or RB.

For example, the base station 110 may allocate uplink resources for the second time interval 790 of the third time region 780 within the second time region 770, based on the identified entire resource region or the second resource region.

Referring to the enlarged part of the second time interval 790, the base station 110 may identify a first resource region 795 based on symbol # 13, which is the second interference symbol, and the bandwidth. The base station 110 may or may not allocate uplink data for the second interference symbol for each terminal. For example, the base station 110 may allocate first resources 791 for the first terminal on the cell. For example, in response to identifying that the interference strength is less than first threshold strength, the base station 110 may allocate the first resources 791, which are at least a part of the entire resource region including the first resource region 795, to the first terminal. The first threshold strength may be threshold strength related to the first terminal. On the other hand, the base station 110 may allocate second resources 792 for the second terminal on the cell. For example, in response to identifying that the interference strength is greater than or equal to the second threshold strength, the base station 110 may allocate the second resources 792, which are at least part of the second resource region distinguished from the first resource region 795 in the entire resource regions, for the second terminal. The second threshold strength may be threshold strength related to the second terminal. For example, the second resource region may indicate a resource region identified based on symbols (symbol #0 to symbol #12) and the bandwidth. Each of the first resources 791 and the second resources 792 may include at least a part of the entire RBs of the bandwidth.

Referring to the above-described, when identifying an allocatable symbol for uplink data within the second time region 770, the base station 110 may identify the allocable symbol and the first resource region 795 based on a plurality of threshold strengths set to a variable value. Accordingly, the first resource region 795 of the entire resource region may be excluded or included in the resource region for uplink data according to a terminal.

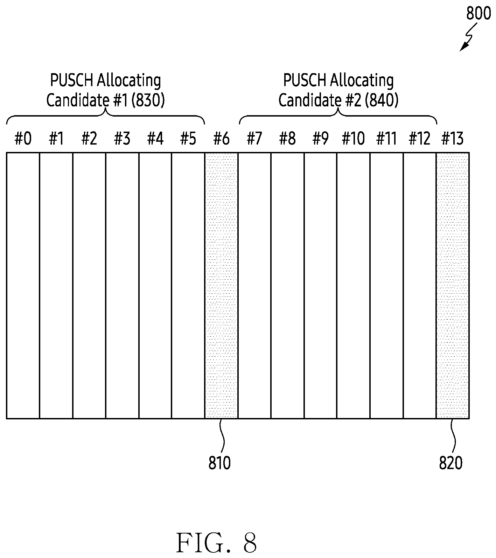

FIG. 8 is a diagram illustrating an example of identifying the number of a symbol in an allocatable resource region according to various embodiments.

The allocatable resource region of FIG. 8 may indicate a resource region identified by the base station 110 according to the method of FIG. 7A or FIG. 7B. The resource region may be identified based on at least one symbol in time interval and at least one RB in bandwidth.

FIG. 8 illustrates an example of a time interval 800 including the allocatable resource region. For example, the time interval 800 may indicate one slot. The time interval 800 may comprise a plurality of symbols. For example, the plurality of symbols may include 14 symbols.

Referring to FIG. 8, the base station 110 may identify allocatable symbols for uplink data with respect to part of symbols of the time interval 800. For example, the base station 110 may identify symbols #0 to symbol #5 and symbols #7 to symbol #12 of the time interval 800 as symbols to be allocated for uplink data. The allocated symbols may be determined as time resources of uplink resources to be allocated.

For example, the base station 110 may identify that uplink data is not allocated in symbol #6 and symbol #13 of the time interval 800. Each of the symbol #6 and the symbol #13 may be referred to as an interference symbol. For example, when interference strength of interference symbol is greater than or equal to threshold strength, the base station 110 may identify that uplink data is not allocated. In response to identifying that uplink data is not allocated to the symbol #6, the base station 110 may identify a resource region 810 identified based on the symbol #6 and bandwidth. In addition, in response to identifying that uplink data is not allocated to the symbol #13, the base station 110 may identify a resource region 820 identified based on the symbol #13 and the bandwidth. The resource region 810 and the resource region 820 may indicate 820 may indicate a resource region in which uplink data is not transmitted within entire frequency region (e.g., all RBs) of the bandwidth related to a cell on the cell of the base station 110.

For example, the base station 110 may identify candidate regions 830 and 840 capable of allocating resources for uplink data within the time interval 800. For example, the first candidate region 830 may include symbols #0 to #5. The second candidate region 840 may include symbols #7 to #12. The base station 110 may identify that symbol #0 to symbol #5 are allocatable resource regions, and may perform grouping of continuous symbols into one region. Continuous symbols may be referred to as a candidate region.

For example, according to a communication system, the base station 110 may identify a part of the candidate regions 830 and 840 as a resource region allocatable for uplink data. For example, in a case of a communication system that allows resource allocation only from symbols having the lowest index to continuous symbols, the base station 110 may identify only the first candidate region 830 as an allocatable resource region for uplink data. In addition, for example, in a case of a communication system that allows resource allocation for all symbols within the time interval 800, the base station 110 may identify the first candidate region 830 and the second candidate region 840 as allocatable resource regions for uplink data.

FIG. 9 is a diagram illustrating an example method of performing decoding based on interference strength of a symbol according to various embodiments.

The interference strength of FIG. 9 may indicate interference strength for each symbol identified for received uplink signal, as shown in FIGS. 7A and 7B. The interference strength for each symbol may be referred to as interference strength $I_k$ of interference symbol.

Referring to FIG. 9, an example 900 illustrates an example of a method of identifying an allocatable resource region within a first time region 910 in which the base station 110 receives an uplink signal. The first time region 910 receiving the uplink signal may be referred to as a reception region. The example 900 illustrates a method of identifying an allocatable symbol for uplink data at third time 913 within the first time region 910, but embodiment of the present disclosure is not limited thereto. For example, an embodiment of the present disclosure may also be applied to identifying an allocatable symbol within a second time region (not shown) that performs scheduling. The scheduling may indicate a resource allocation for another uplink signal received at first time 935 within a third time region 930 receiving uplink signal. In other words, the second time region may be a partial section between the first time region 910 and the third time region 930.

Referring to the example 900, the base station 110 may receive an uplink signal at the first time 911 within the first time region 910. For example, the uplink signal may be a signal transmitted by a terminal (e.g., the terminal 120 in FIG. 1) on a cell provided by the base station 110. For example, the uplink signal may include uplink data PUSCH. The uplink signal may be a signal transmitted on the first time interval. For example, the first time interval may indicate one slot including a plurality of first symbols. For example, the plurality of first symbols may comprise 14 symbols. The first time interval may correspond to the first time 911.

For example, the base station 110 may estimate interference strength for each symbol of the first time interval at second time 912 within the first time region 910. For example, the interference strength for each symbol may be identified based on reception power of a symbol (e.g., a first interference symbol) capable of being transmitted an interference signal and reception power of a reference symbol different from the first interference symbol. For example, the interference strength for each symbol may be referred to as interference strength $I_k$ of interference symbol.

For example, the base station 110 may identify a symbol capable of allocating uplink data PUSCH at the third time 913 within the first time region 910. For example, the base station 110 may identify whether uplink data is allocatable to the second interference symbol by comparing the interference strength $I_k$ of the first interference symbol and threshold strength. For example, if the interference strength $I_k$ of the first interference symbol is greater than or equal to the threshold strength, the base station 110 may identify that uplink data is not allocated to the second interference symbol. For example, the second interference symbol may indicate a symbol identified based on an index for indicating the first interference symbol among a plurality of second symbols in the second time interval, which is a target of uplink resource allocation. For example, the second time interval may correspond to fourth time 935 receiving an uplink signal within the third time region 930. For example, an index of the second interference symbol may correspond to an index for indicating the first interference symbol.

For example, in response to identifying that the interference strength $I_k$ of the first interference symbol is less than the threshold strength within the third time 913, the base station 110 may identify the second interference symbol in the second time interval identified based on an index indicating the first interference symbol as an allocatable symbol. Hereinafter, the threshold strength used to identify the allocatable symbol may be referred to as first threshold strength.

For example, the base station 110 may compare the interference strength $I_k$ of the first interference symbol with second threshold strength having a value smaller than the first threshold strength. For example, the base station 110 may identify whether the interference strength $I_k$ of the first interference symbol is greater than or equal to the second threshold strength. When the interference strength $I_k$ of the first interference symbol is less than the first threshold strength and greater than or equal to the second threshold strength, although the second interference symbol is an allocatable symbol, reception performance may be reduced due to interference caused by the second interference symbol. Therefore, in order to improve reception performance, the base station 110 may decode uplink data at fifth time 940 within the third time region 930 based on the interference strength $I_k$ of the first interference symbol.

For example, when the interference strength $I_k$ of the first interference symbol is less than the first threshold strength and greater than or equal to the second threshold strength in the second time 912 or the third time 913, the base station 110 may store the interference strength $I_k$ of the first interference symbol. The base station 110 may decode a part of the uplink signal corresponding to the second interference symbol among the uplink signals transmitted on the second time interval, based on the interference strength $I_k$ of the first interference symbol. For example, the base station 110 may perform the uplink decoding received on the second time interval, based on decoding information called the channel decoding metric. For example, the base station 110 may perform decoding for a part of the uplink signal corresponding to symbols different from the second interference symbol among the second time interval, based on noise information estimated based on a reference signal. For example, the reference signal may include DMRS. For example, the noise information may include noise variance. On the other hand, the base station 110 may perform decoding for a part of the uplink signal corresponding to the second interference symbol among the second time interval, based on noise information estimated based on the reference signal and the interference strength $I_k$ of the first interference symbol.

Referring to the above-described, the base station 110 may not only use interference strength of interference symbol for allocating a resource for uplink signals (or uplink data), but also use for decoding the uplink signal transmitted on allocated resource. Reception performance of the base station 110 may be improved by performing decoding using a channel decoding index identified based on estimated interference strength.

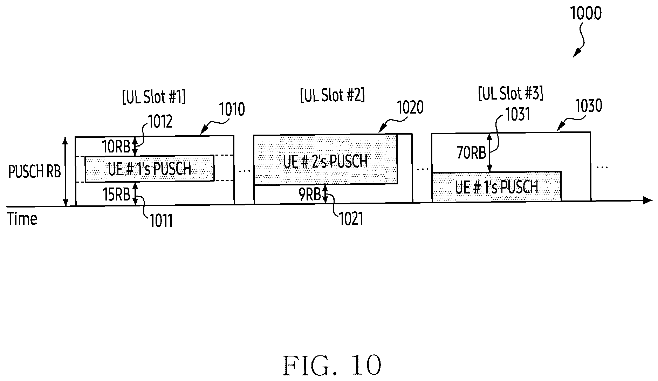

FIG. 10 is a diagram illustrating an example method of estimating interference strength for each symbol based on the number of resource according to various embodiments.

The interference strength of FIG. 10 may indicate interference strength for each symbol identified for received uplink signal, as shown in FIG. 7A and FIG. 7B. The interference strength for each symbol may be referred to as interference strength $I_k$ of interference symbol.

FIG. 10 illustrates an example 1000 of a method for identifying whether to perform estimation of the interference strength $I_k$ of the interference symbol based on the number of resources. For example, the number of resources that are a reference for identifying whether to perform the estimation may indicate time and the number of frequency resources capable of using for the estimation. For example, the number of resources may be defined differently according to a state in which uplink data in RBs on a time interval including the interference symbol is allocated. The state of the RBs may include RB in which uplink data is not allocated to all symbols (e.g., 14 symbols) of the time interval, RB in which uplink data is allocated to symbols rather than the interference symbol of the time interval, and RB in which uplink data is allocated to all symbols within the time interval.

For example, when RBs used to estimate interference strength are RB in which uplink data is not allocated to all symbols of the time interval, the number of resources may indicate the number of RB in which uplink data is not allocated to all symbols of the time interval. In addition, when RBs used to estimate interference strength are RB in which uplink data is allocated to symbols rather than the interference symbol of the time interval, the number of resources may indicate the number of RB in which uplink data is allocated to symbols rather than the interference symbol of the time interval. In addition, when RBs used to estimate interference strength are RB in which uplink data is allocated to all symbols within the time interval, the number of resources may indicate the number of RB in which uplink data is allocated to all symbols within the time interval.

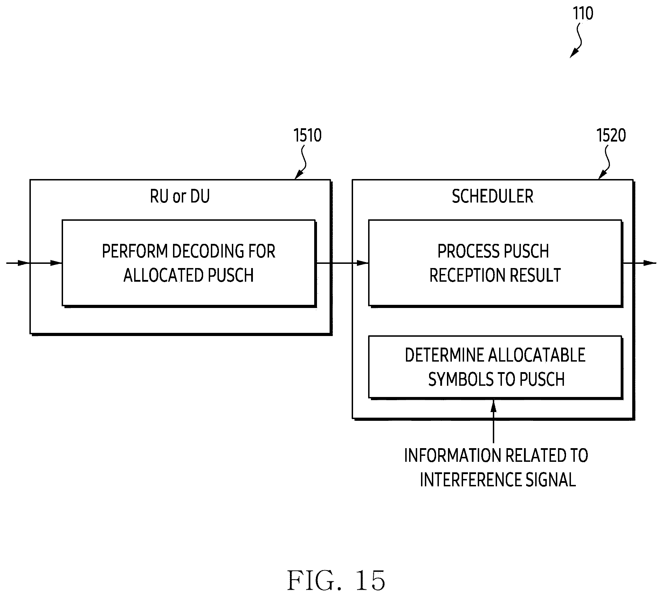

For example, when the number of resources is greater than or equal to threshold number, the interference strength of the interference symbol may be estimated. When estimating the interference strength of the interference symbol, the methods of FIG. 5 may be used. For example, after estimating the interference strength in response to identifying that the number of the resources is greater than or equal to the threshold number, the base station (e.g., the base station 110 of FIG. 1) may store information on the number of resources. For example, the information may include the number of RBs used for the estimation and the number of symbols related to the RBs. For example, the information may include the number of resources for one time interval. In addition, the information may include the number of resources accumulated for a plurality of time intervals. On the other hand, when the number of resources is less than the threshold number, the estimation of the interference strength of the interference symbol may not be performed. A method of determining an allocatable symbol when the estimation of the interference strength is not performed will be described in greater detail with reference to FIG. 15 below.

For example, when the number of accumulated resources for the plurality of time intervals is greater than or equal to the accumulated threshold number, the base station 110 may perform estimation of the interference strength based on a combination of the interference strength $I_k$ of the interference symbol for each of the plurality of time intervals. For example, the interference strength for the plurality of time intervals may be identified based on an average value (e.g., average of absolute value, square average of absolute value) of the interference strength for each of the time interval of the plurality of time intervals, median, variance, or accumulated value.

Referring to FIG. 10, example 1000 illustrates an example of identifying whether interference strength $I_k$ of interference symbol is estimated based on the number of resources when RBs used to estimate the interference strength are RBs in which uplink data is not allocated to all symbols of the time interval. The example 1000 illustrates a first time interval 1010, a second time interval 1020, and a third time interval 1030. An uplink signal (or uplink data PUSCH) transmitted on the first time interval 1010 and the third time interval 1030 may be a signal transmitted by the first terminal. An uplink signal (or uplink data PUSCH) transmitted on the second time interval 1020 may be a signal transmitted by the second terminal. The flow of time may proceed from the first time interval 1010 to the third time interval 1030. In example 1000, it is assumed that the threshold number is 10 RB, and the accumulated threshold number is 50 RB. However, the embodiments of the present disclosure are not limited thereto.

For example, the first time interval 1010 may include a first part 1011 and a second part 1012, which are RBs in which uplink data is not allocated to all symbols. For example, the first part 1011 may be 15RB. For example, the second part 1012 may be 10RB. Regarding the first time interval 1010, the number of RBs in which uplink data is not allocated to all of the symbols may be 25 RB, which is the sum of the first part 1011 and the second part 1012. In other words, the number of the resources for identifying estimation of interference strength $I_k$ of interference symbol may be 25RB. Since the 25RB is greater than or equal to the threshold number 10RB, the base station 110 may perform estimation of interference strength $I_k$ of interference symbol for the first time interval 1010. In this case, the base station 110 may store the number of the resources of the first time interval 1010.

For example, the second time interval 1020 may include a part 1021, which is RBs in which uplink data is not allocated to all of the symbols. For example, the part 1021 may be 9RB. In other words, the number of the resources for identifying estimation of interference strength $I_k$ of interference symbol may be 9RB. Since the 9RB is less than the threshold number 10RB, the base station 110 may not perform estimation of interference strength $I_k$ of interference symbol for the second time interval 1020. In this case, the base station 110 may store the number of the resources of the second time interval 1020.

For example, the third time interval 1030 may include a part 1031, which is RBs in which uplink data is not allocated to all of the symbols. For example, the part 1031 may be 70RB. In other words, the number of the resources for identifying estimation of interference strength $I_k$ of interference symbol may be 70RB. Since the 70RB is greater than or equal to the threshold number 10RB, the base station 110 may perform estimation of interference strength $I_k$ of interference symbol for the third time interval 1030.

The base station 110 may identify whether the sum of the number of the resources in the third time interval 1030 and the number of the resources in the first time interval 1010, which is a previous time interval in the first terminal related to the third time interval 1030 is greater than or equal to the accumulated threshold number. For example, when the sum is greater than or equal to the accumulated threshold number, the base station 110 may perform estimation of interference strength based on a combination of interference strength $I_k$ of interference symbol for each time interval of the plurality of time intervals. For example, the base station 110 may identify whether 95RB is greater than or equal to the accumulated threshold number 50RB, wherein the 95RB is the sum of the number 25RB of resources of the first time interval 1010 and the number 70RB of resources of the third time interval 1030. Accordingly, the base station 110 may estimate interference strength $I_k$ of interference symbol based on a combination of interference strength of the first time interval 1010 and interference strength of the third time interval 1030. For example, interference strength for the first time interval 1010 and the third time interval 1030 may be identified based on average value (e.g., average of absolute value, square average of absolute value) of interference strength for each time interval of the first time interval 1010 and the third time interval 1030, median, variance, or accumulated value.

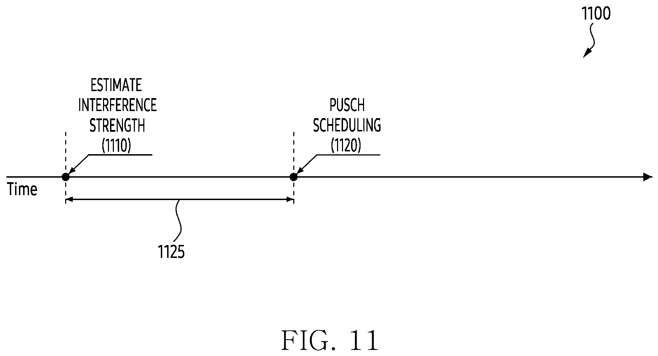

FIG. 11 is a diagram illustrating an example of performing a resource allocation based on timing of estimating interference strength and timing of performing scheduling according to various embodiments.

The interference strength of FIG. 11 may indicate interference strength for each symbol identified for received uplink signal, as shown in FIG. 7A and FIG. 7B. The interference strength for each symbol may be referred to as interference strength $I_k$ of interference symbol. Timing of estimating the interference strength may indicate second time 712 in the first time region 710 of FIG. 7A or second time 762 in the first time region 760 of FIG. 7B. The timing of performing the scheduling may be included in the second time region 720 of FIG. 7A or the second time region 770 of FIG. 7B. Hereinafter, the timing of estimating the interference strength may be referred to as a first timing. The timing of performing the scheduling may be referred to as a second timing. Each of the first timing and the second timing may be indicated by at least one of an index of a slot, system time, or system frame number (SFN).

Referring to FIG. 11, an example 1100 of identifying reliability of the estimation based on a difference between time to estimate interference strength and time to perform scheduling is illustrated. Referring to the example 1100, the base station 110 may estimate interference strength of uplink signal received at the first timing 1110. For example, the base station 110 may identify interference strength for each symbol of the uplink signal. For example, the base station 110 may store a result of identification for the interference strength for each symbol. For example, the result may store information on interference strength $I_k$ of the interference symbol and the first timing 1110. In FIG. 11, the example 1100 including only the first timing 1110 is illustrated, but an embodiment of the present disclosure is not limited thereto. The example 1100 may include a plurality of first timings 1110.

Referring to the example 1100, the base station 110 may perform scheduling of uplink data PUSCH at the second timing 1120. For example, the base station 1110 may perform the scheduling (resource allocation) of uplink data, based on a difference 1125 between the first timing 1110 and the second timing 1120, and threshold time.

For example, when the difference 1125 is less than the threshold time, the base station 110 may identify that interference strength $I_k$ identified at the first timing 1110 has a relatively high reliability. Accordingly, the base station 110 may perform scheduling at the second timing 1120 based on interference strength $I_k$ identified at the first timing 1110. For example, when a plurality of first timings 1110 are included, the difference 1125 may indicate a time difference between the second timing 1120 and a first timing 1110 (or recent first timing 1110), which is closest to the second timing 1120 among the plurality of first timing 1110. Alternatively, when a plurality of first timings 1110 are included, the difference 1125 may indicate a time difference between the first timing 1110 of each of the plurality of first timings 1110 and the second timing 1120. For example, a time difference between each of five first timings 1110 and the second timing 1120 may be defined as a difference 1125. By comparing the difference 1125 with the threshold time, at least a part of the first timings 1110 may be identified. Scheduling may be performed based on interference strength $I_k$ of the at least a part of the first timings 1110.

On the other hand, when the difference 1125 is greater than or equal to the threshold time, the base station 110 may identify that the reliability of interference strength $I_k$ identified at the first timing 1110 is relatively low. Accordingly, the base station 110 may refrain from using interference strength $I_k$ identified in the first timing 1110.

For example, in response to identifying that the difference 1125 is greater than or equal to the threshold time, the base station 110 may perform a reservation for a specified number of RBs or allocate the specified number of RBs to a specific terminal. For example, the reservation or allocation for the specific terminal may be performed according to a state in which uplink data in RBs on the time interval including interference symbols is allocated. The state of the RBs may include RB in which uplink data is not allocated to all symbols (e.g., 14 symbols) of the time interval, RB in which uplink data is allocated to symbols rather than interference symbol of the time interval, or RB in which uplink data is allocated to all symbols within the time interval. For example, in case of RB in which uplink data is not allocated to all symbols (e.g., 14 symbols) of the time interval and RB in which uplink data is allocated to symbols rather than interference symbol of the time interval, the reservation may be performed. For example, the reservation may indicate that an arbitrary terminal is set not to use a resource. In other words, the reservation may indicate performing scheduling in an empty state to prevent the use of the resource. For example, allocation for the specific terminal may be performed in case of RB in which uplink data is allocated to all symbols within the time interval.

For example, the base station 110 may reserve RBs in which RB, uplink data is not allocated to all symbols within the time interval, so that they are not allocated to a specific terminal related to the uplink data and terminals different from the specific terminal.

For example, the base station 110 may reserve RBs on the interference symbol in the time interval so that they are not allocated to a specific terminal and terminals different from the specific terminal. In this time, the base station 110 may allocate uplink data to RBs on symbols different from the interference symbol within the time interval. The specific terminal may indicate a terminal related to the uplink data.

For example, the base station 110 may allocate RBs in which uplink data is allocated to all symbols within the time interval, to a specific terminal related to the uplink data. This may be because it is difficult to accurately estimate interference strength as reception power of uplink data of each the RB varies when the RBs are divided and allocated to terminals different from the specific terminal.

Based on the specified number of RBs that is allocated to the specific terminal or reserved, the base station 110 may identify interference strength of interference symbol at other time interval after the time interval. For example, the base station 110 may perform scheduling based on the specified number of RBs. The base station 110 may receive an uplink signal from a terminal on the other time interval based on the scheduling. The specified number of RBs may be used when the base station 110 estimates interference strength of interference symbol for the uplink signal received on the other time interval. The specified number of RBs may indicate RBs for a specific symbol known in advance by the base station 110.

FIG. 11 illustrates an example of identifying reliability of estimation result of interference strength based on the event identified that the difference 1125 is greater than or equal to threshold time, but embodiments of the present disclosure are not limited thereto. For example, the event may include at least one of identifying that a difference between the first timing and the second timing is greater than or equal to threshold time, that modulation and coding scheme (MCS) is less than threshold MCS, block error rate (BLER) is greater than or equal to threshold BLER, or the number of resource blocks to be allocated is greater than or equal to threshold resource block.

For example, when it is identified that MCS identified at the second timing 1120 is lower than the threshold MCS, the base station 110 may perform a reservation for a specified number of RBs or allocate the specified number of RBs to a specific terminal. In addition, for example, when the BLER identified at the second timing 1120 is higher than the threshold BLER, the base station 110 may perform a reservation for a specified number of RBs or allocate the specified number of RBs to a specific terminal. In addition, for example, when identifying that the number of resource blocks to be allocated is greater than or equal to the threshold resource blocks at the second timing 1120, the base station 110 may perform a reservation for a specified number of RBs or allocate the specified number of RBs to a specific terminal. The number of the MCS or the resource blocks to be allocated may be identified for a specific terminal or a specific terminal group. For example, the specific terminal may indicate a terminal to transmit uplink data on resources in allocated resource region. For example, a group of the specific terminal may indicate terminals in which information indicating that a specific function may be performed is transmitted through a UE capability message. For example, the specific function may include a function with allocation of a reference signal (e.g., SRS) that may function as an interference signal. For example, the specific function may include transmit antenna selection based on the interference signal.

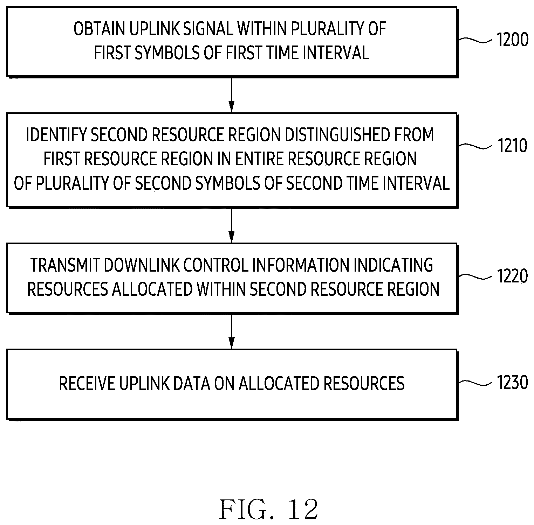

FIG. 12 is a flowchart illustrating a method of identifying an allocatable resource region based on interference strength according to various embodiments.

A method of FIG. 12 may be performed by the base station 110 of FIG. 5. For example, at least one operation of FIG. 12 may be performed by a processor of the base station 110.

Referring to FIG. 12, in operation 1200, the base station 110 may obtain an uplink signal within a plurality of first symbols of a first time interval. For example, the base station 110 may receive the uplink signal from a terminal (e.g., the terminal 120 of FIG. 1). The uplink signal may include uplink data (e.g., PUSCH). For example, the first time interval may indicate one slot. For example, the plurality of first symbols may indicate 14 symbols included in the first time interval.

In operation 1210, the base station 110 may identify a second resource region, which is distinguished from a first resource region, in the entire resource region of a plurality of second symbols of a second time interval. For example, the base station 110 may identify the allocatable second resource region based on identifying that interference strength of first interference symbol among the plurality of first symbols is greater than or equal to threshold strength. For example, a second time interval may indicate a time interval different from the first time interval. For example, the second time interval may indicate a time interval after the first time interval.

The entire resource region may indicate a resource region of the plurality of second symbols. For example, the entire resource region may be identified using the plurality of second symbols and bandwidth. For example, the entire resource region may be identified based on a frequency resource region corresponding to the bandwidth on the plurality of second symbols. The bandwidth may indicate an activated bandwidth among a plurality of bandwidth parts configured in a cell related to the terminal.

The first resource region may indicate a resource region of a second interference symbol among the plurality of second symbols, in the entire resource region of the plurality of second symbols of the second time interval. The first resource region may be identified using the second interference symbol and the bandwidth. The second interference symbol may indicate a symbol within the second time interval identified based on an index for indicating the first interference symbol. For example, an index for indicating the second interference symbol within the second time interval may correspond to the index indicating the first interference symbol within the plurality of first symbols.

The second resource region may indicate a resource region of symbols different from the second interference symbol among the plurality of second symbols. For example, the second resource region may be identified using the other symbols and the bandwidth. The second resource region may be a resource region distinguished from the first resource region in the entire resource region. For example, the second resource region may indicate a resource region different from the first resource region in the entire resource region.

In operation 1220, the base station 110 may transmit downlink control information indicating resources allocated within the second resource region. For example, the base station 110 may transmit the downlink control information to the terminal. For example, the downlink control information may include information for indicating a resource for the terminal to transmit uplink data. Information indicating a resource to transmit the uplink data may indicate the resources allocated within the second resource region. For example, the resources may include at least one symbol and at least one resource on RB among the second resource regions. For example, the at least one symbol may be included in the plurality of second symbols. The at least one RB may be included in the bandwidth.

In operation 1230, the base station 110 may receive uplink data on the allocated resources. For example, the base station 110 may receive an uplink signal including the uplink data on the allocated resources. For example, the allocated resources may indicate resources indicated by the downlink control information. The base station 110 may decode the uplink data received on the resources.

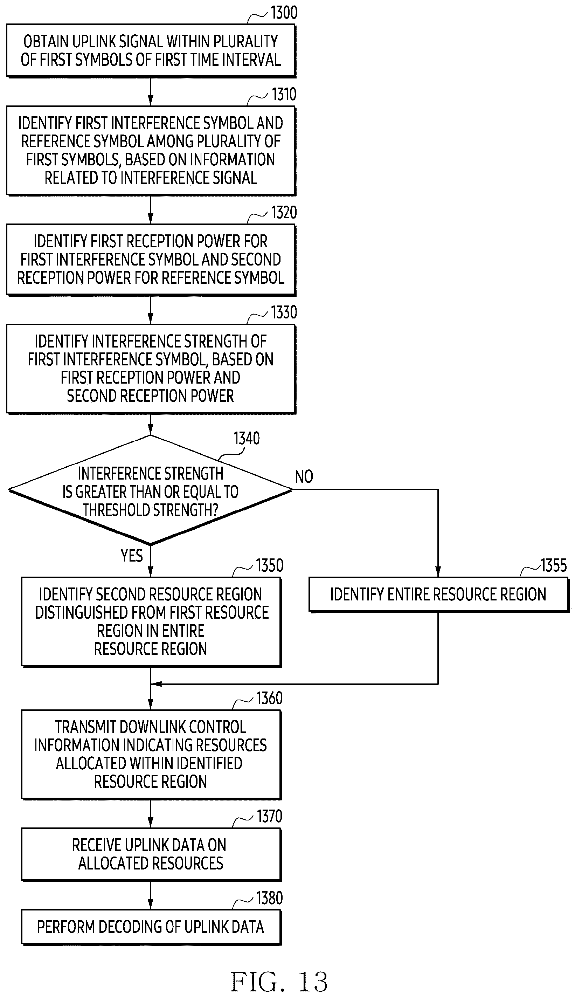

FIG. 13 is a flowchart illustrating an example method of performing a resource allocation based on interference strength and receiving an uplink signal according to various embodiments.

The method of FIG. 13 may be performed by the base station 110 of FIG. 5. For example, at least one operation of FIG. 13 may be performed by a processor of the base station 110. At least a part of the operations of FIG. 13 may be understood to be substantially the same as the operation of FIG. 12.

Referring to FIG. 13, in operation 1300, the base station 110 may obtain an uplink signal within a plurality of first symbols of a first time interval. For example, the base station 110 may receive the uplink signal from a terminal (e.g., the terminal 120 of FIG. 1). The uplink signal may include uplink data (e.g., PUSCH). For example, the first time interval may indicate one slot. For example, the plurality of first symbols may indicate 14 symbols included in the first time interval.

In operation 1310, the base station 110 may identify a first interference symbol and a reference symbol among the plurality of first symbols based on information related to an interference signal. For example, information related to the interference signal may include information to indicate a location in the time interval of a symbol (hereinafter, interference symbol) in which the interference signal may be transmitted. For example, information for indicating a location of the interference symbol may indicate an index of the interference symbol or an index of a group including the interference symbol. Information for indicating a location of the interference symbol may be changed based on a cell operation policy of a communication service provider.

In operation 1320, the base station 110 may identify first reception power for the first interference symbol and second reception power for the reference symbol. For example, the base station 110 may identify the first reception power and the second reception power according to a state in which uplink data in RBs on the time interval is allocated. For example, the state of the RBs may include RB in which uplink data is not allocated to all symbols (e.g., 14 symbols) of the time interval, RB in which uplink data is allocated to symbols rather than interference symbol of the time interval, or RB in which uplink data is allocated to all symbols within the time interval.

In a case of RB in which uplink data is not allocated to all symbols of the first time interval, the base station 110 may obtain an uplink signal not including uplink data across all symbols in the first time interval, within the RB of frequency region. Uplink data is not included across all symbols in the first time interval. The base station 110 may identify a first interference symbol #k and a reference symbol #z (z≠k) among all the symbols in the RB. The first reception power of the first interference symbol may be identified based on interference strength $I_{v,k,r}$ of the first interference symbol and magnitude of noise $N_{v,k,r}$ on the first interference symbol. The second reception power of the reference symbol may be identified based on the magnitude of noise $N_{v,z,r}$ on the reference symbol for the RB and the reception path.

In a case of RB in which uplink data is allocated to symbols rather than the interference symbol of the first time interval, the base station 110 may obtain an uplink signal including uplink data across the symbols rather than the interference symbol in the first time interval, within the RB of frequency region. The base station 110 may identify the first interference symbol #k in the RB and the reference symbol #z (z≠k) to which a reference signal is allocated. For example, the reference signal may include a demodulation reference signal (DMRS). The first reception power of the first interference symbol may be identified based on interference strength $I_{v,k,r}$ of the first interference symbol and magnitude $N_{v,k,r}$ of noise on the first interference symbol. The second reception power of the reference symbol may be identified based on magnitude of noise $N_{v,z,r}$ on the reference symbol based on the reference signal.

In a case of RB in which uplink data is allocated to all symbols in the first time interval, the base station 110 may obtain an uplink signal including uplink data across all symbols in the first time interval, within the RB of a frequency region. The base station 110 may identify the first interference symbol #k and the reference symbol #z (z≠k) among all the symbols in the RB. The first reception power of the first interference symbol may be identified, based on interference strength $I_{v,k,r}$ of the first interference symbol, magnitude of noise $N_{v,k,r}$ on the first interference symbol, and reception power $W_{v,k,r}$ of uplink data (PUSCH) on the first interference symbol. The second reception power of the reference symbol may be identified based on magnitude of noise $N_{v,z,r}$ on the reference symbol for the RB and the reception path and the reception power $W_{v,z,r}$ of uplink data (PUSCH) on the reference symbol.

In operation 1330, the base station 110 may identify interference strength of the first interference symbol based on the first reception power and the second reception power. For example, based on the first reception power and the second reception power, the base station 110 may identify interference strength $I_{v,k,r}$ on the first interference symbol #k for a specific RB and a specific reception path. The base station 110 may identify interference strength $I_k$ of the interference symbol, based on the interference strength $I_{v,k,r}$ on the first interference symbol #k for a specific RB and a specific reception path.

In the above-described example, for convenience of description, it is assumed that the reference symbol is one symbol, but embodiments of the present disclosure is not limited thereto. For example, when the reference symbol includes a plurality of symbols, the received power $P_{v,z,r}$ may be identified based on a representative value of reception power of each of the plurality of symbols. For example, the representative value may include an average, minimum, maximum, or intermediate value for reception power of each of the plurality of symbols.

In operation 1340, the base station 110 may identify whether the interference strength $I_k$ is greater than or equal to threshold strength. For example, the threshold strength may be set to a fixed value. For example, the threshold strength set to the fixed value may be applied to all terminals in the cell, regardless of the MCS level or RB. The threshold strength may be set to a variable value based on at least one of a level of modulation and coding scheme (MCS), power headroom (PH), or the number of allocatable RB. The threshold strength set to the variable value may be differently applied to each of terminals in the cell, based on MCS level or RB of a target terminal. In operation 1340, the base station 110 may perform operation 1350 in response to identifying that the interference strength is greater than or equal to the threshold strength. On the other hand, in operation 1340, the base station 110 may perform operation 1355 in response to identifying that the interference strength is less than the threshold strength.

In operation 1350, the base station 110 may identify a second resource region distinguished from a first resource region, in the entire resource region. For example, the base station 110 may identify the allocatable second resource region based on identifying that interference strength of the first interference symbol is greater than or equal to the threshold strength.

For example, the second time interval may indicate a time interval different from the first time interval. For example, the second time interval may indicate a time interval after the first time interval.

The entire resource region may indicate a resource region of the plurality of second symbols. For example, the entire resource region may be identified using the plurality of second symbols and bandwidth. For example, the entire resource region may be identified based on a frequency resource region corresponding to the bandwidth on the plurality of second symbols. The bandwidth may indicate an activated bandwidth among a plurality of bandwidth parts configured in a cell related to the terminal.

In the entire resource regions of the plurality of second symbols of the second time interval, the first resource region may indicate a resource region of a second interference symbol among the plurality of second symbols. The first resource region may be identified using the second interference symbol and the bandwidth. The second interference symbol may indicate a symbol in the second time interval identified based on an index for indicating the first interference symbol. For example, an index for indicating the second interference symbol within the second time interval may correspond to an index indicating the first interference symbol within the plurality of first symbols.

The second resource region may indicate a resource region of symbols different from the second interference symbol among the plurality of second symbols. For example, the second resource region may be identified using the other symbols and the bandwidth. The second resource region may be a resource region distinguished from the first resource region in the entire resource region. For example, the second resource region may indicate a resource region different from the first resource region in the entire resource region.

For example, the base station 110 may identify the second interference symbol as a symbol incapable of allocating, based on identifying that interference strength of the first interference symbol is greater than or equal to the threshold strength. This is because the influence of interference of the interference signal (e.g., SRS) to be transmitted in the second interference symbol is large. Accordingly, the base station 110 may identify the second resource region excluding the first resource region of the second interference symbol, in the entire resource regions of the plurality of second symbols.

In operation 1355, the base station 110 may identify the entire resource region. For example, the base station 110 may identify the entire resource region based on identifying that interference strength of the first interference symbol is less than the threshold strength. For example, the base station 110 may identify the second interference symbol as a symbol capable of allocating based on identifying that interference strength of the first interference symbol is less than the threshold strength. Accordingly, the base station 110 may identify the entire resource region of the plurality of second symbols including the second interference symbol.

In operation 1360, the base station 110 may transmit downlink control information indicating resources allocated within the second resource region. For example, the base station 110 may transmit the downlink control information to the terminal. For example, the downlink control information may include information for indicating a resource for the terminal to transmit uplink data. Information indicating a resource to transmit the uplink data may indicate the resources allocated within the second resource region. For example, the resources may include at least one symbol and at least one resource on RB among the second resource region. For example, the at least one symbol may be included in the plurality of second symbols. The at least one RB may be included in the bandwidth. For example, the downlink control information may be used by the UE for preventing(or restricting) transmission of uplink data within the second interference symbol. For example, the second interference symbol may have an index of symbol usable for transmission of a SRS on a neighbor cell.

In operation 1370, the base station 110 may receive uplink data on the allocated resources. For example, the base station 110 may receive an uplink signal including the uplink data on the allocated resources. For example, the allocated resources may indicate resources indicated by the downlink control information.

In operation 1380, the base station 110 may perform decoding of the uplink data received on the resources.

For example, in operation 1355, in response to identifying that interference strength $I_k$ of the first interference symbol is less than the threshold strength, the base station 110 may identify the second interference symbol in the second time interval identified based on an index indicating the first interference symbol as an allocatable symbol. Hereinafter, the threshold strength used to identify the allocatable symbol may be referred to as first threshold strength.

For example, the base station 110 may compare the interference strength $I_k$ of the first interference symbol with second threshold strength having a value smaller than the first threshold strength. For example, the base station 110 may identify whether the interference strength $I_k$ of the first interference symbol is greater than or equal to the second threshold strength. When the interference strength $I_k$ of the first interference symbol is less than the first threshold strength and greater than or equal to the second threshold strength, the second interference symbol is an allocatable symbol, but reception performance may be reduced due to the influence of interference by the second interference symbol. Therefore, in order to improve reception performance, the base station 110 may perform decoding for uplink data transmitted on the second time interval including the second interference symbol, based on the interference strength $I_k$ of the first interference symbol.

For example, when the interference strength $I_k$ of the first interference symbol is less than the first threshold strength and greater than or equal to the second threshold strength, the base station 110 may store the interference strength $I_k$ of the first interference symbol. Based on the interference strength $I_k$ of the first interference symbol, the base station 110 may perform decoding for a part of the uplink signal corresponding to the second interference symbol among the uplink signals transmitted on the second time interval. For example, the base station 110 may perform the uplink decoding received on the second time interval, based on decoding information called channel decoding metric. For example, based on noise information estimated based on a reference signal, the base station 110 may perform decoding for a part of the uplink signal corresponding to symbols different from the second interference symbol among the second time interval. For example, the reference signal may include DMRS. For example, the noise information may include noise variance. On the other hand, the base station 110 may perform decoding for a part of the uplink signal corresponding to the second interference symbol among the second time interval, based on noise information estimated based on the reference signal and the interference strength $I_k$ of the first interference symbol.

Although not shown in FIG. 13, as described in FIG. 10, the base station 110 may perform estimation of the interference strength $I_k$ of the first interference symbol through operations 1310 to 1330, based on the number of resources. The number of resources, which is a reference for identifying whether to perform the estimation, may indicate time usable for the estimation and the number of frequency resources. For example, the number of resources may be defined differently according to a state in which uplink data in the RBs on the first time interval including the first interference symbol is allocated. The state of the RBs may include RB in which uplink data is not allocated to all symbols (e.g., 14 symbols) of the first time interval, RB in which uplink data is allocated to symbols rather than the first interference symbol of the first time interval, or RB in which uplink data is allocated to all symbols within the first time interval.

For example, when the number of resources is greater than or equal to the first threshold number, estimation of the interference strength of the first interference symbol may be performed. When estimating the interference strength of the first interference symbol, the methods of FIG. 5 described above may be used. For example, after estimating the interference strength in response to identifying that the number of resources is greater than or equal to the first threshold number, the base station (e.g., the base station 110 of FIG. 1) may store information on the number of resources. For example, the information may include the number of RBs used for the estimation and the number of symbols related to the RBs. For example, the information may include the number of resources for one time interval (e.g., the first time interval). Alternatively, the information may include the number of resources accumulated for a plurality of time intervals. On the other hand, when the number of the resources is less than the first threshold number, the estimation of the interference strength of the first interference symbol may not be performed. A method of determining an allocatable symbol when the estimation of the interference strength is not performed is described in detail in FIG. 15 below.

In addition, although not shown in FIG. 13, as described in FIG. 11, based on the event, the base station 110 may perform resource allocation (e.g., scheduling) for resource regions identified in operation 1350 or operation 1355. For example, the event may include at least one of identifying a difference between the first timing and the second timing being longer than or equal to threshold time, identifying a MCS being lower than or equal to a threshold MCS, identifying a BLER (block error rate) is higher than or equal to a threshold BLER, or identifying a number of resource block to be allocated being greater than or equal to a threshold resource block. The first timing may indicate a time at which the interference strength $I_k$ of the first interference symbol is estimated. The second timing may indicate a time to perform allocation for the identified resource region.

FIG. 13 illustrates an example of operations performed by the base station 110, but embodiments of the present disclosure are not limited thereto. For example, at least one of the operations may be performed by a part configurations of the base station 110 (e.g., DU 210 or RU 220 in FIG. 2A).

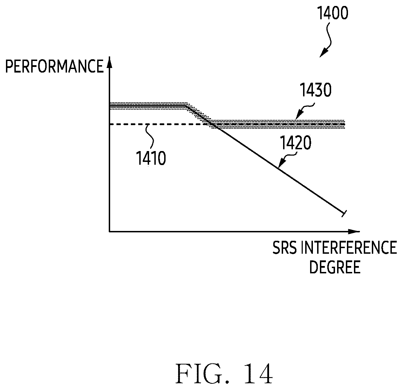

FIG. 14 is a graph illustrating example reception performance according to an interference degree according to various embodiments.

FIG. 14 shows a graph 1400 on reception performance of a base station (e.g., the base station 110 of FIG. 1) according to the degree of interference of an interference signal (e.g., SRS). The horizontal axis of the graph 1400 may indicate interference strength by the SRS, and the vertical axis may indicate reception performance.

Referring to graph 1400, a first line 1410 indicating a case of allocating a resource region (e.g., a second resource region) excluding a resource region (e.g., a first resource region) on the interference symbol related to the interference signal, a second line 1420 indicating a case of allocating the entire resource region including the first resource region and the second resource region, and a third line 1430 indicating a case in which a resource region is allocated differently according to the interference strength of the interference signal are illustrated.

Referring to the first line 1410, in case that the base station 110 allocates only the second resource region except for the first resource region to a terminal (e.g., the terminal 120 of FIG. 1), even when the interference strength is changed, performance may be maintained. On the other hand, referring to the second line 1420, in case that the base station 110 allocates the entire resource region including the first resource region to the terminal 120, performance may be changed according to a change in the interference strength. Referring to the first line 1410 and the second line 1420, in a region in which interference strength is weak, performance of the first line 1410 may be lower than that of the second line 1420. This may be due to allocating except for part resources (the first resource region). However, in a region in which interference strength is strong, performance of the first line 1410 may be higher than that of the second line 1420. This may be because a part of uplink data transmitted through the interference symbol is deteriorated due to interference.

Referring to the third line 1430, the base station 110 may allocate the entire resource region in a region in which the interference strength is weak, as in the second line 1420, and may allocate only the second resource region in a region in which the interference strength is strong, as in the first line 1410. A reference for distinguishing a region having a weak interference strength and a region having a strong interference strength may be referred to as threshold strength (or first threshold strength).

As described above, the base station 110 may perform resource allocation for uplink transmission of the terminal 120 by identifying interference strength for each symbol. Accordingly, the base station 110 may minimize and/or reduce performance degradation due to the partial resource, by improving reception performance using all of the allocatable resources, and allocating allocatable resources excluding a part of resources (e.g., a resource region on a symbol with a high probability of transmitting an interference signal in a neighbor cell).

FIG. 15 is a diagram illustrating an example method of identifying an allocatable resource region based on information related to an interference signal according to various embodiments.

Referring to FIG. 15, an example of a base station 110 performing the method is illustrated. For example, the base station 110 of FIG. 15 may indicate an example of the base station 110 of FIG. 1.

Referring to FIG. 15, the base station 110 may include RU or DU (RU/DU) 1510 and a scheduler 1520. For example, the RU may include at least a part of the RU 220 of FIG. 2A. For example, the RU may be referred to as a massive multiple input multiple output (MIMO) unit (MMU). For example, the DU may include at least a part of the DU 210 of FIG. 2A. For example, the scheduler 1520 may include at least a part of the medium access control (MAC) layer of the base station 110. For example, the scheduler 1520 may be included in the DU.

For example, the RU/DU 1510 may decode the received uplink signal. For example, the base station 110 may receive an uplink signal from a terminal (e.g., the terminal 120 of FIG. 1). For example, the uplink signal may include uplink data PUSCH. The RU/DU 510 may decode the uplink data.

In the method of FIG. 15, the RU/DU 1510 may not estimate the interference strength for each symbol, unlike FIG. 5. For example, when the number of resources is less than the threshold number, estimation of interference strength of interference symbol may not be performed. For example, the number of resources may indicate time and the number of frequency resources available for the estimation. For example, the number of resources may be defined differently according to a state in which uplink data in RBs on a time interval including the interference symbol is allocated. The state of the RBs may include RB in which uplink data is not allocated to all symbols (e.g., 14 symbols) of the time interval, RB in which uplink data is allocated to symbols rather than interference symbol of the time interval, RB in which uplink data is allocated to all symbols within the time interval.

Referring to FIG. 15, the scheduler 1520 may process a reception result of the uplink data PUSCH based on a result of the decoding. For example, when decoding for the uplink data is successful, the scheduler 1520 may deliver data packet for the uplink data to higher layer (e.g., RLC, PDCP). For example, when decoding of the uplink data fails, the scheduler 1520 may perform a retransmission procedure (e.g., HARQ).

For example, the scheduler 1520 may identify an allocatable symbol for a transmission of uplink data based on information related to an interference signal.

For example, information related to the interference signal may include information for indicating a location within a time interval of a symbol (hereinafter, interference symbol) capable of being transmitted the interference signal. For example, information for indicating the location of the interference symbol may indicate an index of the interference symbol or an index of a group including the interference symbol. Information for indicating a location of the interference symbol may be changed based on a cell operation policy of a communication service provider.

For example, information related to the interference signal may include information for indicating whether the interference signal is operated in a neighbor cell. The neighbor cell may indicate a cell adjacent to a cell provided by the base station 110 for a terminal (e.g., the terminal 120 of FIG. 1) related to the uplink data. For example, information for indicating whether the interference signal is operated may include at least one of information indicating that the interference signal is allocated in the neighbor cell, information indicating whether to activate a function accompanied by the transmission of the interference signal in the neighbor cell, and information indicating the number of terminals related to the neighbor cell. For example, information indicating that the interference signal is allocated in the neighbor cell may include setting information on the interference signal to be allocated or allocated within a specific time interval (e.g., slot). For example, the function may include transmission antenna selection based on the interference signal. For example, when the transmission antenna selection is activated, transmission of the interference signal may be accompanied. This is because the transmission antenna selection is performed based on the interference signal. For example, information indicating the number of terminals related to the neighbor cell may include the number of terminals in a radio resource control (RRC) connection state (RRC_connected) on the neighbor cell, or the number of terminals that transmit UE capability message including information on the functions on the neighbor cell. Since the terminal transmitting the UE capability message including information on the function is likely to perform the function, the interference signal may be highly likely to be allocated.

Information for indicating whether the interference signal is operated in the neighbor cell may be obtained by the base station 110 based on signaling between the neighbor cell and the cell. For example, the base station 110 may obtain information related to the interference signal from another base station. In addition, the DU of the base station 110 (e.g., the DU 210 of FIG. 2A) may obtain information related to the interference signal from the base station 110 or another DU of the other base station.

For example, the scheduler 1520 may identify a symbol corresponding to a location of the interference symbol as a symbol incapable of allocating for transmission of uplink data PUSCH, based on information for indicating a location of the interference symbol. For example, the scheduler 1520 may not allocate a resource region on the symbol corresponding to an index of the interference symbol as a resource for transmitting uplink data.

For example, based on information for indicating whether the interference signal is operated in the neighbor cell, the scheduler 1520 may identify a symbol corresponding to a symbol to which the interference signal will be transmitted as a symbol incapable of allocating a transmission of uplink data PUSCH. For example, based on setting information for the interference signal allocated in the neighbor cell, the scheduler 1520 may not allocate a resource region on a symbol in which the interference signal within a specific time interval is transmitted or will be transmitted as a resource for transmission of uplink data. For example, when the function is activated, the scheduler 1520 may not allocate a resource region on a symbol in which the interference signal within the specific time interval is transmitted or will transmitted as a resource for a transmission of uplink data. For example, when the number of RRC-connected terminals is greater than or equal to threshold terminal number, the scheduler 1520 may not allocate a resource region on a symbol in which the interference signal within the specific time interval is transmitted or will transmitted as a resource for a transmission of uplink data. For example, when the number of terminals transmitting the UE capability message is greater than or equal to the number of threshold terminals, the scheduler 1520 may not allocate a resource region on a symbol in which the interference signal within the specific time interval is transmitted or will transmitted as a resource for a transmission of uplink data.

For example, the scheduler 1520 may identify a symbol different from a symbol excluded as not to be allocated as an allocable symbol for uplink data. The scheduler 1520 may allocate resources on the identified allocatable symbol for the uplink data.

In FIG. 15, decoding of uplink data by the RU/DU 1510 may include decoding by the RU or decoding by the DU. For example, decoding performed by the RU/DU 1510 may be determined according to function split of the base station 110 illustrated in FIG. 2B. Hereinafter, in consideration of convenience of description, decoding performed by the base station 110 including the RU and the DU will be described as a reference.

In addition, operations performed by each of the RU/DU 1510 of the base station 110 and the scheduler 1520 is described in FIG. 15, but an embodiment of the present disclosure is not limited thereto. For example, the operations may be performed by a processor (e.g., the processor 1703 of FIG. 17 ) of the base station 110 by controlling components of the base station 110. In other words, at least one operation of FIG. 15 may be performed by the processor of the base station 110.

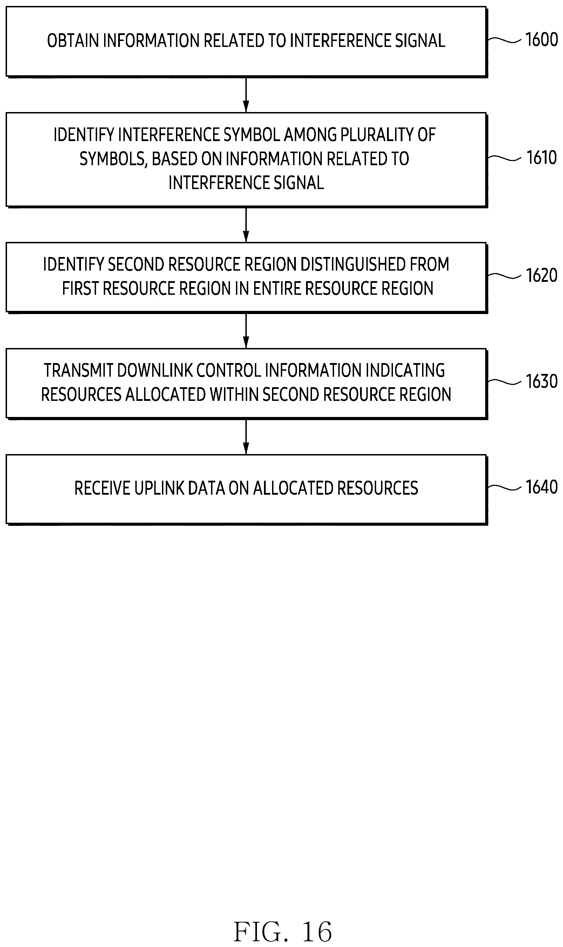

FIG. 16 is a flowchart illustrating an example method of identifying an allocatable resource region based on information related to an interference signal according to various embodiments.

The method of FIG. 16 may be performed by the base station 110 of FIG. 15. For example, at least one operation of FIG. 16 may be performed by a processor of the base station 110.

Referring to FIG. 16, in operation 1600, the base station 110 may obtain information related to an interference signal.

For example, information related to the interference signal may include information to indicate a location within a time interval of a symbol (hereinafter, interference symbol) in which interference signal may be transmitted. For example, information for indicating a location of the interference symbol may indicate an index of the interference symbol or an index of a group including the interference symbol. The information for indicating a location of the interference symbol may be changed based on a cell operation policy of a communication service provider. For example, information for indicating a location of the interference symbol may be set in the base station 110.

For example, information related to the interference signal may include information for indicating whether the interference signal is operated in a neighbor cell. The neighbor cell may indicate a cell adjacent to a cell provided by the base station 110 for a terminal (e.g., the terminal 120 of FIG. 1) related to the uplink data. For example, information for indicating whether the interference signal is operated may include at least one of information indicating that the interference signal is allocated in the neighbor cell, information indicating whether to activate a function accompanied by the transmission of the interference signal in the neighbor cell, and information indicating the number of terminals related to the neighbor cell. For example, information indicating that the interference signal is allocated in the neighbor cell may include setting information on the interference signal to be allocated or allocated within a specific time interval (e.g., slot). For example, the function may include transmission antenna selection based on the interference signal. For example, when the transmission antenna selection is activated, transmission of the interference signal may be accompanied. This is because the transmission antenna selection is performed based on the interference signal. For example, information indicating the number of terminals related to the neighbor cell may include the number of terminals in a radio resource control (RRC) connection state (RRC_connected) on the neighbor cell, or the number of terminals that transmit UE capability message including information on the functions on the neighbor cell. Since the terminal transmitting the UE capability message including information on the function is likely to perform the function, the interference signal may be highly likely to be allocated.

Information for indicating whether the interference signal is operated in the neighbor cell may be obtained by the base station 110 based on signaling between the neighbor cell and the cell. For example, the base station 110 may obtain information related to the interference signal from another base station. In addition, the DU of the base station 110 (e.g., the DU 210 of FIG. 2A) may obtain information related to the interference signal from the base station 110 or another DU of the other base station.

In operation 1610, the base station 110 may identify an interference symbol among a plurality of symbols based on information related to the interference signal. For example, the plurality of symbols may indicate symbols in a time interval (e.g., slot) of resources to be allocated for uplink data PUSCH to a terminal (e.g., the terminal 120 in FIG. 1). For example, the base station 110 may identify the interference symbol based on information for indicating a location of the interference symbol. For example, the base station 110 may identify the interference symbol to which the interference signal will be transmitted based on information to indicate whether the interference signal is operated in the neighbor cell.

In operation 1620, the base station 110 may identify a second resource region distinguished from a first resource region in the entire resource region. For example, the base station 110 may identify the entire resource region identified using the plurality of symbols and bandwidth. The above bandwidth may include a bandwidth part activated within a cell set by the base station 110 for the terminal 120. The base station 110 may configure a plurality of bandwidth parts in the cell for the terminal 120. For example, the plurality of bandwidth parts may include four bandwidth parts. Among the four bandwidth portions, one bandwidth portion may be activated for transmitting the uplink signal.

For example, the base station 110 may identify a first resource region identified using the interference symbol and the bandwidth, in the entire resource region. For example, the base station 110 may identify the second resource region distinguished from the first resource region, in the entire resource region. The second resource region may indicate a resource region of symbols different from the interference symbol among the plurality of symbols. For example, the second resource region may be identified using the other symbols and the bandwidth. The second resource region may be a resource region distinguished from the first resource region in the entire resource region. For example, the second resource region may indicate a resource region different from the first resource region in the entire resource region.

In operation 1630, the base station 110 may transmit downlink control information indicating resources allocated within the second resource region. For example, the base station 110 may transmit the downlink control information to the terminal. For example, the downlink control information may include information for indicating a resource for transmitting uplink data by the terminal. The information indicating a resource to transmit the uplink data may indicate the resources allocated within the second resource region. For example, the resources may include at least one symbol and at least one resource on RB among the second resource regions. For example, the at least one symbol may be included in the plurality of symbols. The at least one RB may be included in the bandwidth. For example, the downlink control information may be used by the UE for preventing(or restricting) transmission of uplink data within the second interference symbol. For example, the second interference symbol may have an index of symbol usable for transmission of a SRS on a neighbor cell.

In operation 1640, the base station 110 may receive uplink data on the allocated resources. For example, the base station 110 may receive an uplink signal including the uplink data on the allocated resources. For example, the allocated resources may indicate resources indicated by the downlink control information. The base station 110 may decode the uplink data received on the resources.

Referring to the above, according to an embodiment of the present disclosure, the apparatus and method identifies a symbol (e.g., an interference symbol) to which a signal that may function as interference (e.g., an interference signal) may be transmitted, and discloses an apparatus and a method for allocating uplink resources based on identified symbols. The apparatus and method according to an embodiment of the present disclosure may improve uplink reception performance of a base station, by excluding a resource on a symbol in which an interference signal is expected to be transmitted in resource allocation for uplink data.

FIG. 17 is a block diagram illustrating an example configuration of a base station according to various embodiments.

FIG. 17 illustrates a functional configuration of a base station (e.g., the base station 110 of FIG. 1). In receiving an uplink signal of a terminal (e.g., the terminal 120), the base station 110 or the RU of the base station 110 may operate as a receiving end. Hereinafter, although described based on the base station 110, a part of descriptions on the base station 110 may be applied to the RU of the base station 110.

Referring to FIG. 17, the base station 110 may include a transceiver 1701, a processor (e.g., including processing circuitry) 1703, a memory 1705, and a backhaul transceiver 1707.

The transceiver 1701 may perform functions for transmitting and receiving a signal in a wired communication environment. The transceiver 1701 may include a wired interface to control a direct connection between apparatuses through a transmission medium (e.g., copper wire, optical fiber). For example, the transceiver 1701 may transmit an electrical signal to another apparatus through a copper wire or perform a conversion between an electrical signal and an optical signal.

The transceiver 1701 may perform functions for transmitting and receiving a signal in a wireless communication environment. For example, the transceiver 1701 may perform a conversion function between a baseband signal and a bit string according to a physical layer standard of a system. For example, when transmitting data, the transceiver 1701 generates complex-valued symbols by encoding and modulating a transmission bit string. In addition, when receiving data, the transceiver 1701 restores a received bit string by demodulating and decoding a baseband signal. In addition, the transceiver 1701 may include a plurality of transmission/reception paths.

The transceiver 1701 may transmit and receive a signal as described above. Accordingly, all or part of the transceiver 1701 may be referred to as a communication unit, a transmission unit, a reception unit, or a transmission/reception unit. In addition, in the following description, transmission and reception performed through a wireless channel are used in a sense of including that the above-described processing is performed by the transceiver 1701.

The processor 1703 may include various processing circuitry and controls overall operations of the base station 110. The processor 1703 may be referred to as a controller. For example, the processor 1703 transmits and receives a signal through the transceiver 1701 (or the backhaul transceiver 1707). In addition, the processor 1703 records and reads data in the memory 1705. In addition, the processor 1703 may perform functions of a protocol stack required by a communication standard. According to an embodiment, the processor 1703 may obtain an MMSE weight of a receiver included in the base station 110, based on a channel estimated using reception reference signals, estimated noise and interference, and additional diagonal load identified by a receiver resolution. For example, the processor 1703 may perform the operations of FIGS. 8 and 10. Although only the processor 1703 is illustrated in FIG. 17, the base station 110 may include two or more processors according to another implementation example. For example, the processor 1703 may be operably coupled with the transceiver 1701, the memory 1705, or the backhaul transceiver 1707. For example, operative coupling of the processor 1703 with the transceiver 1701 may indicate that the processor 1703 is connected to the transceiver 1701 through another component of the base station 110. Alternatively, operative coupling of the processor 1703 with the transceiver 1701 may indicate that the transceiver 1701 is controlled by the processor 1703.

In the present disclosure, operations of the processor 1703 may refer, for example, to being executed by software or may refer, for example, to controlling hardware components such as a Field Programmable Gate Array (FPGA) or an application-specific integrated circuit (ASIC). In addition, the processor 1703 may include components such as software components, object-oriented software components, class components, and task component and at least one of processes, functions, attributes, procedures, subroutines, segments of program code, drivers, firmware, microcode, circuit, data, database, data structures, tables, arrays, and variables. The processor 1703 may include at least one module, and the term "module" includes a unit configured with hardware, software, or firmware. For example, the module may be used interchangeably with terms such as logic, logic block, component, or circuit. The module may be an integrally configured component or a minimum unit or part thereof that performs one or more functions. For example, the module may be configured as the ASIC.

The memory 1705 stores data such as a basic program, an application program, and setting information for an operation of the base station 110. The memory 1705 may be referred to a storage unit. The memory 1705 may be configured with a volatile memory, a nonvolatile memory, or a combination of the volatile memory and the nonvolatile memory. In addition, the memory 1705 provides the stored data according to a request of the processor 1703.

The base station 110 may further include the backhaul transceiver 1707 for being connected to a core network or another base station. The backhaul transceiver 1707 provides an interface for performing communication with other nodes in the network. That is, the backhaul transceiver 1707 converts a bit string transmitted from the base station to another node, for example, another connection node, another base station, a higher node, a core network, and the like into a physical signal, and converts a physical signal received from the other node into a bit string.

In various example embodiments, a method performed by an apparatus of a base station may comprise obtaining an uplink signal within a plurality of first symbols in first time interval. The method may comprise, based on identifying interference strength of a first interference symbol of the plurality of the first symbols greater than or equal to threshold strength, identifying a second resource region, which is allocatable, distinguished from a first resource region of a second interference symbol of a plurality of second symbols in an entire resource region of the plurality of the second symbols in second time interval different from the first time interval. The method may comprise transmitting, to a terminal, downlink control information indicating resources allocated within the second resource region. The method may comprise receiving, from the terminal, uplink data on the resources. The entire resource region may be identified using the plurality of the second symbols and a bandwidth. The first resource region may be identified using the second interference symbol and the bandwidth identified based on an index for indicating the first interference symbol.

According to an example embodiment, the method may comprise identifying a reference symbol different from the first interference symbol of the plurality of the first symbols and the first interference symbol associated with an interference signal of the plurality of the first symbols based on information associated with the interference signal. The method may comprise identifying the interference strength of the first interference symbol based on first reception power of the uplink signal for the first interference symbol and second reception power of the uplink signal for the reference symbol.

According to an example embodiment, the method may comprise, based on the uplink signal, which does not include uplink data across the plurality of first symbols, being obtained within a resource block of the bandwidth, identifying the first reception power identified based on the interference strength and noise of the first interference symbol. The method may comprise identifying the second reception power identified based on noise of the reference symbol. The method may comprise identifying the interference strength based on a maximum value of reference power and a difference between the first reception power and the second reception power.

According to an example embodiment, the method may comprise based on the uplink signal, which does not include uplink data on part symbol of the plurality of first symbols, being obtained within a resource block of the bandwidth, identifying the first reception power identified based on the interference strength and noise of the first interference symbol different from the part symbol. The method may comprise identifying noise of the reference symbol associated with the second reception power using a reference signal mapped to the reference symbol included the part symbol. The method may comprise identifying the interference strength based on maximum value of reference power and a difference between the first reception power and the noise of the reference symbol.

According to an example embodiment, the method may comprise based on the uplink signal, which includes uplink data within a resource block of the bandwidth across the plurality of the first symbols, being obtained, identifying the first reception power identified based on reception power for the uplink data of the first interference symbol, noise of the first interference symbol, and the interference strength. The method may comprise identifying the second reception power identified based on noise of the reference symbol and reception power for the uplink data of the reference symbol. The method may comprise identifying the interference strength based on maximum value of reference power and a difference between the first reception power and the second reception power.

According to an example embodiment, the interference strength of the first interference symbol may be identified based on a first set of interference strengths for a plurality of resource blocks in the first interference symbol and a second set of interference strengths for reception paths included in the base station in the first interference symbol.

According to an example embodiment, information associated with the interference signal may include an index indicating the first interference symbol to be transmitted the interference signal. An index indicating the second interference symbol in the second time interval may correspond to the index indicating the first interference symbol.

According to an example embodiment, the threshold strength may be identified based on at least one a MCS (modulation and coding scheme), a PH (power headroom), or a number of allocatable resource blocks.

According to an example embodiment, the method may comprise storing the interference strength identified at a first timing. The method may comprise in response to identifying an event at a second timing after the first timing, performing reservation for at least one resource block of the first interference symbol or allocation the at least resource block for a terminal transmitting the uplink signal. The second timing may represent timing identifying the second resource region. The reservation may be performed in response to the uplink signal including a resource block not including uplink data in the plurality of the first symbols or resource block including uplink data in at least one symbol of the plurality of the first symbols. The allocation may be performed in response to the uplink signal including uplink data in the plurality of the first symbols.

According to an example embodiment, the event may include at least one of identifying a difference between the first timing and the second timing being greater than or equal to threshold time, identifying an MCS being less than or equal to a threshold MCS, identifying a BLER (block error rate) is greater than or equal to a threshold BLER, or identifying a number of resource block to be allocated being greater than or equal to a threshold resource block.

According to an example embodiment, the method may comprise identifying whether the interference strength is greater than or equal to the threshold strength. The method may comprise based on identifying that the interference strength is less than the threshold strength, identifying the entire resource region of the plurality of the second symbols including the first resource region and the second resource region. The method may comprise transmitting the terminal the downlink control information indicating another resources allocated within the entire resource region.

According to an example embodiment, the method may comprise performing decoding for the uplink data. The method may comprise based on the interference strength being lower than the threshold strength and greater than or equal to another threshold strength less than the threshold strength, wherein the decoding for portion of the uplink data mapped to portion of the another resources within the first resource region is performed based on noise information corrected based on the interference strength.

According to an example embodiment, the bandwidth may represent one BWP (bandwidth part) of a plurality of BWPs configured for the terminal in a cell associated with the base station.

According to various example embodiments, an apparatus of a base station may comprise a transceiver. The apparatus may comprise a processor operatively coupled the transceiver. The processor may be configured to obtain an uplink signal within a plurality of first symbols in first time interval. The processor may be configured to, based on identifying interference strength of a first interference symbol of the plurality of the first symbols being greater than or equal to threshold strength, identify a second resource region, which is allocatable, distinguished from a first resource region of a second interference symbol of a plurality of second symbols in an entire resource region of the plurality of the second symbols in second time interval different from the first time interval. The processor may be configured to control the transceiver to transmit, to a terminal, downlink control information indicating resources allocated within the second resource region. The processor may be configured to control the transceiver to receive, from the terminal, uplink data on the resources. The entire resource region may be identified using the plurality of the second symbols and a bandwidth. The first resource region may be identified using the second interference symbol and the bandwidth identified based on an index for indicating the first interference symbol.

According to an example embodiment, the processor may be configured to identify a reference symbol different from the first interference symbol of the plurality of the first symbols and the first interference symbol associated with an interference signal of the plurality of the first symbols based on information associated with the interference signal. The processor may be configured to identify the interference strength of the first interference symbol based on first reception power of the uplink signal for the first interference symbol and second reception power of the uplink signal for the reference symbol.

According to an example embodiment, the processor may be configured to, based on the uplink signal, which does not include uplink data across the plurality of first symbols, being obtained within a resource block of the bandwidth, identify the first reception power identified based on the interference strength and noise of the first interference symbol. The processor may be configured to identify the second reception power identified based on noise of the reference symbol. The processor may be configured to identify the interference strength based on a maximum value of reference power and a difference between the first reception power and the second reception power.

According to an example embodiment, the processor may be configured to, based on the uplink signal, which does not include uplink data on part symbol of the plurality of first symbols, being obtained within a resource block of the bandwidth, identify the first reception power identified based on the interference strength and noise of the first interference symbol different from the part symbol. The processor may be configured to identify noise of the reference symbol associated with the second reception power using a reference signal mapped to the reference symbol included the part symbol. The processor may be configured to identify the interference strength based on a maximum value of reference power and a difference between the first reception power and the noise of the reference symbol.

According to an example embodiment, the processor may be configured to, based on the uplink signal, which includes uplink data within a resource block of the bandwidth across the plurality of the first symbols, being obtained, identify the first reception power identified based on reception power for the uplink data of the first interference symbol, noise of the first interference symbol, and the interference strength. The processor may be configured to identify the second reception power identified based on noise of the reference symbol and reception power for the uplink data of the reference symbol. The processor may be configured to identify the interference strength based on maximum value of reference power and a difference between the first reception power and the second reception power.

According to an example embodiment, the interference strength of the first interference symbol may be identified based on a first set of interference strengths for a plurality of resource blocks in the first interference symbol and a second set of interference strengths for reception paths included in the base station in the first interference symbol.

According to an example embodiment, information associated with the interference signal may include the index indicating the first interference symbol to be transmitted the interference signal. An index indicating the second interference symbol in the second time interval may correspond to the index for indicating the first interference symbol.

According to various example embodiments, a device of a base station, may comprise memory storing instructions. The device may comprise a transceiver. The device may comprise a processor. The instructions, when executed by the processor, may cause the device to, receive, through the transceiver, uplink signals within symbols of a first slot. The instructions, when executed by the processor, may cause the device to, in response to receiving the uplink signals, obtain an interference strength of a symbol that has an index usable for transmission of a sounding reference signal (SRS) on a neighbor cell from among the symbols of the first slot. The instructions, when executed by the processor, may cause the device to, based on the interference strength greater than a threshold strength, determine, as time resources for uplink data to be transmitted from a user equipment (UE) within a second slot, at least one symbol respectively having at least another index distinct from the index usable for the transmission of the SRS on the neighbor cell, from among symbols of the second slot. The instructions, when executed by the processor, may cause the device to, transmit, through the transceiver to the UE, downlink control information indicating the determined at least one symbol from among the symbols of the second slot as the time resources for the uplink data to be transmitted within the second slot from the UE. The downlink control information is to be used by the UE for preventing transmission of uplink data within a symbol of the second slot having the index usable for transmission of an SRS on the neighbor cell.

According to an example embodiment, transmission of uplink data on a bandwidth configured for the UE within the symbol of the second slot having the index usable for the transmission of the SRS on the neighbor cell may be disabled based on the interference strength greater than the threshold strength. Transmission of uplink data on at least portion of the bandwidth within the symbol of the second slot having the index usable for the transmission of the SRS on the neighbor cell may be enabled based on the interference strength less than or equal to the threshold strength.

According to an example embodiment, the instructions, when executed by the processor, may cause the device to determine the at least one symbol as the time resources by recognizing, based on the interference strength greater than the threshold strength, that a symbol having the index usable for the transmission of the SRS on the neighbor cell is interfered by the SRS.

According to an example embodiment, the instructions, when executed by the processor, may cause the device to, obtain the symbol usable for transmission of the SRS on the neighbor cell from among the symbols of the first slot by using information associated with the SRS and a reference symbol different from the symbol usable for transmission of the SRS on the neighbor cell from among the symbols of the first slot. The information associated with the SRS may include the index of the symbol usable for transmission of the SRS on the neighbor cell from among the symbols of the first slot. The interference strength may be calculated based on first reception power of uplink signals within the symbol usable for transmission of the SRS on the neighbor cell from among the symbols of the first slot and second reception power of uplink signals within the reference symbol of the first slot.

According to an example embodiment, the instructions, when executed by the processor, may cause the device to, based on the uplink signals, which do not include uplink data across the symbols of the first slot, that are obtained within a resource block of the bandwidth, calculate the first reception power identified based on noise of the symbol having the index usable for the transmission of the SRS on the neighbor cell of the first slot. The instructions, when executed by the processor, may cause the device to calculate the second reception power identified based on noise of the reference symbol. The instructions, when executed by the processor, may cause the device to calculate the interference strength based on a maximum value of reference power and a difference between the first reception power and the second reception power.

According to an example embodiment, the instructions, when executed by the processor, may cause the device to, based on the uplink signals, which include uplink data across one or more symbols that are different from the symbol having the index usable for the transmission of the SRS on the neighbor cell from among the symbols of the first slot, are obtained within a resource block of the bandwidth, calculate the first reception power identified based on noise of the symbol having the index usable for the transmission of the SRS on the neighbor cell of the first slot. The instructions, when executed by the processor, may cause the device to calculate noise of the reference symbol associated with the second reception power using a reference signal mapped to the reference symbol included in the one or more symbols. The instructions, when executed by the processor, may cause the device to calculate the interference strength based on a maximum value of reference power and a difference between the first reception power and the noise of the reference symbol.

According to an example embodiment, the instructions, when executed by the processor, may cause the device to, based on the uplink signals, which include uplink data across the symbols of the first slot, that are obtained within a resource block of the bandwidth, calculate the first reception power identified based on reception power for uplink data of the symbol having the index of the first slot, and noise of the symbol having the index usable for the transmission of the SRS on the neighbor cell of the first slot. The instructions, when executed by the processor, may cause the device to calculate the second reception power identified based on noise of the reference symbol and reception power for uplink data of the reference symbol. The instructions, when executed by the processor, may cause the device to calculate the interference strength based on a maximum value of reference power and a difference between the first reception power and the second reception power.

According to an example embodiment, the interference strength of the symbol having the index usable for the transmission of the SRS on the neighbor cell may be identified based on a first set of interference strengths for resource blocks in the symbol having the index usable for the transmission of the SRS on the neighbor cell of the first slot and a second set of interference strengths for reception paths included in the base station in the symbol having the index usable for the transmission of the SRS on the neighbor cell.

According to an example embodiment, the threshold strength may be identified based on at least one modulation coding scheme (MCS), a power headroom (PH), or a number of allocatable resource blocks.

According to an example embodiment, the instructions, when executed by the processor, may cause the device to store the interference strength identified at first timing. The instructions, when executed by the processor, may cause the device to, in response to identifying an event at second timing after the first timing, perform reservation for at least one resource block of the symbol having the index usable for the transmission of the SRS on the neighbor cell of the first slot or allocation the at least resource block for the UE transmitting uplink signals. The second timing may represent a time for scheduling resources on the at least one symbol. The reservation may be performed in response to the uplink signals including a resource block not including uplink data in the symbols of the first slot or a resource block including uplink data in the at least one symbol of the symbols of the first slot. The allocation may be performed in response to the uplink signals including uplink data in the symbols of the first slot.

According to an example embodiment, the event may include at least one of identifying a difference between the first timing and the second timing being greater than or equal to threshold time, identifying an MCS being less than or equal to a threshold MCS, identifying a block error rate (BLER) greater than or equal to a threshold BLER, or identifying a number of resource blocks to be allocated being greater than or equal to a threshold resource block.

According to an example embodiment, the instructions, when executed by the processor, may cause the device to, in response to transmitting to the UE, the downlink control information indicating the at least one symbol as the time resources for the uplink data, receive the uplink data on the at least one symbol of the second slot. The instructions, when executed by the processor, may cause the device to, based on the interference strength being less than or equal to the threshold strength and greater than another threshold strength less than the threshold strength, perform decoding for the uplink data using noise information corrected by the interference strength.

According to an example embodiment, the bandwidth may represent one activated bandwidth part (BWP) of a plurality of BWPs configured for the UE on a cell of the base station.

According to various example embodiments, a method performed by a device of a base station, may comprise receiving uplink signals within symbols of a first slot. The method performed by a device of a base station, may comprise in response to receiving the uplink signals, obtaining an interference strength of a symbol that has an index usable for transmission of a sounding reference signal (SRS) on a neighbor cell from among the symbols of the first slot. The method performed by a device of a base station, may comprise based on the interference strength greater than a threshold strength, determining, as time resources for uplink data to be transmitted from a user equipment (UE) within a second slot, at least one symbol respectively having at least another index distinct from the index usable for the transmission of the SRS on the neighbor cell, from among symbols of the second slot. The method performed by a device of a base station, may comprise transmitting downlink control information indicating the determined at least one symbol from among the symbols of the second slot as the time resources for the uplink data to be transmitted within the second slot from the UE. The downlink control information is to be used by the UE for preventing transmission of uplink data within a symbol of the second slot having the index usable for transmission of an SRS on the neighbor cell.

According to an example embodiment, transmission of uplink data on a bandwidth configured for the UE within the symbol of the second slot having the index usable for the transmission of the SRS on the neighbor cell may be disabled based on the interference strength greater than the threshold strength. Transmission of uplink data on at least portion of the bandwidth within the symbol of the second slot having the index usable for the transmission of the SRS on the neighbor cell may be enabled based on the interference strength less than or equal to the threshold strength.

According to an example embodiment, the method may comprise determining the at least one symbol as the time resources by recognizing, based on the interference strength greater than the threshold strength, that a symbol having the index usable for the transmission of the SRS on the neighbor cell is interfered by the SRS.

According to an example embodiment, the method may comprise obtaining the symbol usable for transmission of the SRS on the neighbor cell from among the symbols of the first slot by using information associated with the SRS and a reference symbol different from the symbol usable for transmission of the SRS on the neighbor cell from among the symbols of the first slot. The information associated with the SRS may include the index of the symbol usable for transmission of the SRS on the neighbor cell from among the symbols of the first slot. The interference strength may be calculated based on first reception power of uplink signals within the symbol usable for transmission of the SRS on the neighbor cell from among the symbols of the first slot and second reception power of uplink signals within the reference symbol of the first slot,

According to an example embodiment, the interference strength of the symbol having the index usable for the transmission of the SRS on the neighbor cell may be identified based on a first set of interference strengths for resource blocks in the symbol having the index usable for the transmission of the SRS on the neighbor cell of the first slot and a second set of interference strengths for reception paths included in the base station in the symbol having the index usable for the transmission of the SRS on the neighbor cell.

According to an example embodiment, the threshold strength may be identified based on at least one modulation coding scheme (MCS), a power headroom (PH), or a number of allocatable resource block.

According to various example embodiments, a computer-readable storage medium may include instructions. The instructions, when executed by a processor of a device of a base station comprising a transceiver, may cause the device to receive, through the transceiver, uplink signals within symbols of a first slot. The instructions, when executed by a processor of a device of a base station comprising a transceiver, may cause the device to, in response to receiving the uplink signals, obtain an interference strength of a symbol that has an index usable for transmission of a sounding reference signal (SRS) on a neighbor cell from among the symbols of the first slot. The instructions, when executed by a processor of a device of a base station comprising a transceiver, may cause the device to, based on the interference strength greater than a threshold strength, determine, as time resources for uplink data to be transmitted from a user equipment (UE) within a second slot, at least one symbol respectively having at least another index distinct from the index usable for the transmission of the SRS on the neighbor cell, from among symbols of the second slot. The instructions, when executed by a processor of a device of a base station comprising a transceiver, may cause the device to transmit, through the transceiver to the UE, downlink control information indicating the determined at least one symbol from among the symbols of the second slot as the time resources for the uplink data to be transmitted within the second slot from the UE. The downlink control information is to be used by the UE for preventing transmission of uplink data within a symbol of the second slot having the index usable for transmission of an SRS on the neighbor cell.

Methods according to the various example embodiments described in the claims or the present disclosure may be implemented in the form of hardware, software, or a combination of hardware and software.

When implemented as software, a non-transitory computer-readable storage medium storing one or more program (software module) may be provided. The one or more program stored in the computer-readable storage medium is configured for execution by one or more processor in the electronic device. The one or more program include instructions that cause the electronic device to execute methods according to embodiments described in the claims the present disclosure. The one or more programs may be included in a computer program product and provided. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

Such program (software modules, software) may be stored in random access memory, non-volatile memory including flash memory, read only memory (ROM), electrically erasable programmable read only memory (EEPROM), magnetic disc storage device, compact disc-ROM (CD-ROM), digital versatile disc (DVD) or other form of optical storage, magnetic cassette. Alternatively, it may be stored in a memory configured with some or all combinations thereof. In addition, each configuration memory may be included a plurality.

In addition, the program may be stored in an attachable storage device that may be accessed through a communication network, such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may access a device performing an embodiment of the present disclosure.

In the above-described example embodiments of the present disclosure, a component included in the disclosure is expressed in singular or plural according to the presented specific embodiment. However, singular or plural expression is chosen appropriately for the situation presented for convenience of explanation, and the present disclosure is not limited to singular or plural component, and even if the component is expressed in plural, it may be configured with singular, or even if it is expressed in singular, it may be configured with plural.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Meanwhile, in the detailed description of the present disclosure, the specific embodiment have been described, but it goes without saying that various modification is possible within the limit not departing from the scope of the present disclosure.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. A device of a base station, comprising:

   memory storing instructions;
   a transceiver; and
   a processor,
   wherein the instructions, when executed by the processor, cause the device to:

   receive, through the transceiver, uplink signals within symbols of a first slot;
   in response to receiving the uplink signals, obtain an interference strength of a symbol that has an index usable for transmission of a sounding reference signal (SRS) on a neighbor cell from among the symbols of the first slot;
   based on the interference strength greater than a threshold strength, determine, as time resources for uplink data to be transmitted from a user equipment (UE) within a second slot, at least one symbol respectively having at least another index distinct from the index usable for the transmission of the SRS on the neighbor cell, from among symbols of the second slot; and
   transmit, through the transceiver to the UE, downlink control information indicating the determined at least one symbol from among the symbols of the second slot as the time resources for the uplink data to be transmitted within the second slot from the UE,
   wherein the downlink control information is to be used by the UE for preventing transmission of uplink data within a symbol of the second slot having the index usable for transmission of an SRS on the neighbor cell.

2. The device of claim 1,

   wherein transmission of uplink data on a bandwidth configured for the UE within the symbol of the second slot having the index usable for the transmission of the SRS on the neighbor cell is disabled based on the interference strength greater than the threshold strength, and
   wherein transmission of uplink data on at least portion of the bandwidth within the symbol of the second slot having the index usable for the transmission of the SRS on the neighbor cell is enabled based on the interference strength less than the threshold strength.

3. The device of claim 1,
   wherein the instructions, when executed by the processor, cause the device to:
   determine the at least one symbol as the time resources by recognizing, based on the interference strength greater than the threshold strength, that a symbol having the index usable for the transmission of the SRS on the neighbor cell is interfered by the SRS.

4. The device of claim 1,
   wherein the instructions, when executed by the processor, cause the device to:

   obtain the symbol usable for transmission of the SRS on the neighbor cell from among the symbols of the first slot by using information associated with the SRS and a reference symbol different from the symbol usable for transmission of the SRS on the neighbor cell from among the symbols of the first slot,
   wherein the information associated with the SRS includes the index of the symbol usable for transmission of the SRS on the neighbor cell from among the symbols of the first slot, and
   wherein the interference strength is calculated based on first reception power of uplink signals within the symbol usable for transmission of the SRS on the neighbor cell from among the symbols of the first slot and second reception power of uplink signals within the reference symbol of the first slot.

5. The device of claim 4,
   wherein the instructions, when executed by the processor, cause the device to:

   based on the uplink signals, which do not include uplink data across the symbols of the first slot, that are obtained within a resource block of the bandwidth, calculate the first reception power identified based on noise of the symbol having the index usable for the transmission of the SRS on the neighbor cell of the first slot,
   calculate the second reception power identified based on noise of the reference symbol; and
   calculate the interference strength based on a maximum value of reference power and a difference between the first reception power and the second reception power.

**6.** The device of claim 4,
wherein the instructions, when executed by the processor, cause the device to:

based on the uplink signals, which include uplink data across one or more symbols that are different from the symbol having the index usable for the transmission of the SRS on the neighbor cell from among the symbols of the first slot, that are obtained within a resource block of the bandwidth, calculate the first reception power identified based on noise of the symbol having the index usable for the transmission of the SRS on the neighbor cell of the first slot;
calculate noise of the reference symbol associated with the second reception power using a reference signal mapped to the reference symbol included in the one or more symbols; and
calculate the interference strength based on a maximum value of reference power and a difference between the first reception power and the noise of the reference symbol.

**7.** The device of claim 4,
wherein the instructions, when executed by the processor, cause the device to:

based on the uplink signals, which include uplink data across the symbols of the first slot, that are obtained within a resource block of the bandwidth, calculate the first reception power identified based on reception power for uplink data of the symbol having the index usable for the transmission of the SRS on the neighbor cell of the first slot, and noise of the symbol having the index usable for the transmission of the SRS on the neighbor cell of the first slot;
calculate the second reception power identified based on noise of the reference symbol and reception power for uplink data of the reference symbol; and
calculate the interference strength based on a maximum value of reference power and a difference between the first reception power and the second reception power.

**8.** The device of claim 1,
wherein the interference strength of the symbol having the index usable for the transmission of the SRS on the neighbor cell is identified based on a first set of interference strengths for resource blocks in the symbol having the index usable for the transmission of the SRS on the neighbor cell of the first slot and a second set of interference strengths for reception paths included in the base station in the symbol having the index usable for the transmission of the SRS on the neighbor cell.

**9.** The device of claim 1,
wherein the threshold strength is identified based on at least one modulation coding scheme (MCS), a power headroom (PH), or a number of allocatable resource blocks.

**10.** The device of claim 1, wherein the instructions, when executed by the processor, cause the device to:

store the interference strength identified at first timing; and
in response to identifying an event at second timing after the first timing, perform reservation for at least one resource block of the symbol having the index usable for the transmission of the SRS on the neighbor cell of the first slot or allocation the at least resource block for the UE transmitting uplink signals,
wherein the second timing represents a time for scheduling resources on the at least one symbol,
wherein the reservation is performed in response to the uplink signals including a resource block not including uplink data in the symbols of the first slot or a resource block including uplink data in the at least one symbol of the symbols of the first slot,
wherein the allocation is performed in response to the uplink signals including uplink data in the symbols of the first slot.

**11.** The device of claim 10,
wherein the event includes at least one of identifying a difference between the first timing and the second timing being greater than or equal to threshold time, identifying an MCS being less than or equal to a threshold MCS, identifying a block error rate (BLER) greater than or equal to a threshold BLER, or identifying a number of resource blocks to be allocated being greater than or equal to a threshold resource block.

**12.** The device of claim 1, wherein the instructions, when executed by the processor, cause the device to:

in response to transmitting to the UE, the downlink control information indicating the at least one symbol as the time resources for the uplink data, receive the uplink data on the at least one symbol of the second slot; and based on the interference strength being less than or equal to the threshold strength and greater than another threshold strength less than the threshold strength, perform decoding for the uplink data using noise information corrected by the interference strength.

13. The device of claim 2,
wherein the bandwidth represents one activated bandwidth part (BWP) of a plurality of BWPs configured for the UE on a cell of the base station.

14. A method performed by a device of a base station, comprising:

receiving uplink signals within symbols of a first slot;
in response to receiving the uplink signals, obtaining an interference strength of a symbol that has an index usable for transmission of a sounding reference signal (SRS) on a neighbor cell from among the symbols of the first slot;
based on the interference strength greater than a threshold strength, determining, as time resources for uplink data to be transmitted from a user equipment (UE) within a second slot, at least one symbol respectively having at least another index distinct from the index usable for the transmission of the SRS on the neighbor cell, from among symbols of the second slot; and
transmitting downlink control information indicating the determined at least one symbol from among the symbols of the second slot as the time resources for the uplink data to be transmitted within the second slot from the UE, wherein the downlink control information is to be used by the UE for preventing transmission of uplink data within a symbol of the second slot having the index usable for transmission of an SRS on the neighbor cell.

15. A computer-readable storage medium including instructions
wherein the instructions, when executed by a processor of a device of a base station comprising a transceiver, cause the device to:

receive, through a transceiver, uplink signals within symbols of a first slot;
in response to receiving the uplink signals, obtain an interference strength of a symbol that has an index usable for transmission of a sounding reference signal (SRS) on a neighbor cell from among the symbols of the first slot;
based on the interference strength greater than a threshold strength, determine, as time resources for uplink data to be transmitted from a user equipment (UE) within a second slot, at least one symbol respectively having at least another index distinct from the index usable for the transmission of the SRS on the neighbor cell, from among symbols of the second slot; and
transmit, through the transceiver to the UE, downlink control information indicating the determined at least one symbol from among the symbols of the second slot as the time resources for the uplink data to be transmitted within the second slot from the UE,
wherein the downlink control information is to be used by the UE for preventing transmission of uplink data within a symbol of the second slot having the index usable for the transmission of the SRS on the neighbor cell.

110

120

FIG. 1

110

210

215

220

DU

RU

FIG. 2A

FIG. 2B

RADIO FRAME (314)

. . . .

SLOT (306)

$N_{BW}$ SUBCARRIERS (304)

$N_{SC}^{RB}$ CONSECUTIVE SUBCARRIERS (310)

RESOURCE ELEMENT (312)

RESOURCE BLOCK (308)

$N_{symb}$ OFDM SYMBOLS (302)

FIG. 3

TERMINAL (120)                    BASE STATION (110)

SLOT STRUCTURE,
WHETHER SRS IS
ALLOCATED IN CELLS,
AND THE LIKE

[Scheduler]

IDENTIFY SYMBOL FOR PUSCH (400)

ALLOCATE RESOURCE FOR PUSCH (410)

TRANSMIT DOWNLINK CONTROL
INFORMATION FOR ALLOCATED
RESOURCE (420)

TRANSMIT PUSCH (430)

[Receiver (Decoder)]

440

DECODING

FIG. 4A

FIG. 4B

110

510

| RU or DU | |
|---|---|
| PERFORM DECODING FOR PUSCH | |
| ESTIMATE INTERFERENCE STRENGTH FOR EACH SYMBOL | |

520

| Scheduler | |
|---|---|
| PROCESS PUSCH RECEIVED RESULT | |
| IDENTIFY SYMBOL ALLOCATABLE PUSCH | |

INFORMATION RELATED TO INTERFERENCE SIGNAL

$I_{kth\ symbol}$

FIG. 5

600

Symbol Group #1 (610)                    Symbol Group #2 (620)

#0   #1   #2   #3   #4   #5   #6   #7   #8   (#9)  #10  (#11)  #12  (#13)

621        622        623

FIG. 6A

650

[UL System w/ Digital Beamforming]

655

660

691

665

Rx Antenna

Rx Path

#1

CP Removal
& FFT
Antenna #1

#1

#1

692

#2

A/D
RF

#2

CP Removal
& FFT
Antenna #2

#2

Receive Antenna
Combining
(#M-to-#N)

#2

...

#M

#M

CP Removal
& FFT
Antenna #M

#M

#N

670

[UL System w/o Digital Beamforming]

675

680

693

Rx Antenna

#1

CP Removal
& FFT
Antenna #1

#1

#1

I/Q Samples

#2

A/D
RF

#2

CP Removal
& FFT
Antenna #2

#2

...

#M

#M

CP Removal
& FFT
Antenna #M

#M

FIG. 6B

700

710    720    730

711    740

RECEIVE
UPLINK
SIGNAL    712    SCHEDU-
LING    Target
UL slot

ESTIMATE
INTERFERENCE
STRENGTH FOR
EACH SYMBOL    713    ...    ...

IDENTIFY SYMBOL
CAPABLE OF
ALLOCATING PUSCH    ...    ...

#0 #1 #2 #3 #4 #5 #6 #7 #8 #9 #10 #11 #12 #13

741    UE #1's PUSCH

742    UE #2's PUSCH

745

FIG. 7A

750

760　　　　　　　　　770　　　　　　780

761

790

| RECEIVE UPLINK SIGNAL | | SCHEDU-LING | | Target UL slot |

762 ...

| ESTIMATE INTERFERENCE STRENGTH FOR EACH SYMBOL | ... | | ... |

771

| IDENTIFY SYMBOL CAPABLE OF ALLOCATING PUSCH | | ... |

#0　#1　#2　#3　#4　#5　#6　#7　#8　#9　#10　#11　#12　#13

791

UE #1's PUSCH

792

UE #2's PUSCH

795

FIG. 7B

800

| PUSCH Allocating Candidate #1 (830) | | | | | | | PUSCH Allocating Candidate #2 (840) | | | | | | |
|---|---|---|---|---|---|---|---|---|---|---|---|---|---|
| #0 | #1 | #2 | #3 | #4 | #5 | #6 | #7 | #8 | #9 | #10 | #11 | #12 | #13 |

810

820

FIG. 8

FIG. 9

FIG. 10

1100

ESTIMATE
INTERFERENCE
STRENGTH
(1110)

PUSCH
SCHEDULING
(1120)

Time

1125

FIG. 11

OBTAIN UPLINK SIGNAL WITHIN PLURALITY OF
FIRST SYMBOLS OF FIRST TIME INTERVAL ⌇ 1200

↓

IDENTIFY SECOND RESOURCE REGION DISTINGUISHED FROM
FIRST RESOURCE REGION IN ENTIRE RESOURCE REGION
OF PLURALITY OF SECOND SYMBOLS OF SECOND TIME INTERVAL ⌇ 1210

↓

TRANSMIT DOWNLINK CONTROL INFORMATION INDICATING
RESOURCES ALLOCATED WITHIN SECOND RESOURCE REGION ⌇ 1220

↓

RECEIVE UPLINK DATA ON ALLOCATED RESOURCES ⌇ 1230

FIG. 12

```
                                              ⌒1300
┌──────────────────────────────────────────┐
│      OBTAIN UPLINK SIGNAL WITHIN PLURALITY │
│       OF FIRST SYMBOLS OF FIRST TIME INTERVAL│
└──────────────────────────────────────────┘
                        │
                        ▼                     ⌒1310
┌──────────────────────────────────────────┐
│  IDENTIFY FIRST INTERFERENCE SYMBOL AND    │
│  REFERENCE SYMBOL AMONG PLURALITY OF       │
│  FIRST SYMBOLS, BASED ON INFORMATION       │
│  RELATED TO INTERFERENCE SIGNAL            │
└──────────────────────────────────────────┘
                        │
                        ▼                     ⌒1320
┌──────────────────────────────────────────┐
│     IDENTIFY FIRST RECEPTION POWER FOR     │
│   FIRST INTERFERENCE SYMBOL AND SECOND     │
│   RECEPTION POWER FOR REFERENCE SYMBOL     │
└──────────────────────────────────────────┘
                        │
                        ▼                     ⌒1330
┌──────────────────────────────────────────┐
│    IDENTIFY INTERFERENCE STRENGTH OF       │
│  FIRST INTERFERENCE SYMBOL, BASED ON       │
│     FIRST RECEPTION POWER AND              │
│      SECOND RECEPTION POWER                │
└──────────────────────────────────────────┘
```

1340 — INTERFERENCE STRENGTH IS GREATER THAN OR EQUAL TO THRESHOLD STRENGTH?

NO → 1355 — IDENTIFY ENTIRE RESOURCE REGION

YES → 1350 — IDENTIFY SECOND RESOURCE REGION DISTINGUISHED FROM FIRST RESOURCE REGION IN ENTIRE RESOURCE REGION

1360 — TRANSMIT DOWNLINK CONTROL INFORMATION INDICATING RESOURCES ALLOCATED WITHIN IDENTIFIED RESOURCE REGION

1370 — RECEIVE UPLINK DATA ON ALLOCATED RESOURCES

1380 — PERFORM DECODING OF UPLINK DATA

FIG. 13

FIG. 14

110

1510

1520

| RU or DU | | SCHEDULER |
|---|---|---|
| PERFORM DECODING FOR ALLOCATED PUSCH | | PROCESS PUSCH RECEPTION RESULT |
| | | DETERMINE ALLOCATABLE SYMBOLS TO PUSCH |

INFORMATION RELATED TO
INTERFERENCE SIGNAL

FIG. 15

OBTAIN INFORMATION RELATED TO INTERFERENCE SIGNAL ~ 1600

IDENTIFY INTERFERENCE SYMBOL AMONG PLURALITY OF SYMBOLS, BASED ON INFORMATION RELATED TO INTERFERENCE SIGNAL ~ 1610

IDENTIFY SECOND RESOURCE REGION DISTINGUISHED FROM FIRST RESOURCE REGION IN ENTIRE RESOURCE REGION ~ 1620

TRANSMIT DOWNLINK CONTROL INFORMATION INDICATING RESOURCES ALLOCATED WITHIN SECOND RESOURCE REGION ~ 1630

RECEIVE UPLINK DATA ON ALLOCATED RESOURCES ~ 1640

FIG. 16

110

| |
|---|
| TRANSCEIVER (1701) |
| PROCESSOR (1703) |
| MEMORY (1705) |
| BACKHAUL TRANSCEIVER (1707) |

FIG. 17

# INTERNATIONAL SEARCH REPORT

International application No.

**PCT/KR2023/018573**

### A. CLASSIFICATION OF SUBJECT MATTER

**H04W 72/541**(2023.01)i; **H04W 72/04**(2009.01)i; **H04W 72/232**(2023.01)i; **H04W 24/08**(2009.01)i; **H04W 72/21**(2023.01)i; **H04W 72/0457**(2023.01)i; **H04W 72/12**(2009.01)i

According to International Patent Classification (IPC) or to both national classification and IPC

### B. FIELDS SEARCHED

Minimum documentation searched (classification system followed by classification symbols)

H04W 72/541(2023.01); H04J 13/00(2011.01); H04W 16/04(2009.01); H04W 16/32(2009.01); H04W 24/00(2009.01); H04W 24/08(2009.01); H04W 24/10(2009.01); H04W 72/04(2009.01); H04W 72/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 간섭(interference), SRS(sounding reference signal), 업링크(uplink), 심볼 (symbol), 자원(resource)

### C. DOCUMENTS CONSIDERED TO BE RELEVANT

| Category* | Citation of document, with indication, where appropriate, of the relevant passages | Relevant to claim No. |
|---|---|---|
| A | KR 10-1850720 B1 (LG ELECTRONICS INC.) 20 April 2018 (2018-04-20)<br>See paragraphs [0211], [0219]-[0220] and [0222]. | 1-15 |
| A | KR 10-2014-0123486 A (LG ELECTRONICS INC.) 22 October 2014 (2014-10-22)<br>See paragraphs [0125], [0127]-[0128], [0133] and [0140]. | 1-15 |
| A | WO 2013-176466 A1 (LG ELECTRONICS INC.) 28 November 2013 (2013-11-28)<br>See paragraph [0148]. | 1-15 |
| A | KR 10-1611608 B1 (KT CORPORATION) 11 April 2016 (2016-04-11)<br>See paragraphs [0019]-[0023]. | 1-15 |
| A | KR 10-2014-0009983 A (LG ELECTRONICS INC.) 23 January 2014 (2014-01-23)<br>See paragraphs [0215]-[0226]. | 1-15 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 March 2024** | **07 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/018573**

| Patent document cited in search report | | | Publication date (day/month/year) | Patent family member(s) | | | Publication date (day/month/year) |
|---|---|---|---|---|---|---|---|
| KR | 10-1850720 | B1 | 20 April 2018 | AU | 2011-233858 | A1 | 07 June 2012 |
| | | | | AU | 2011-233858 | B2 | 29 January 2015 |
| | | | | CA | 2784035 | A1 | 06 October 2011 |
| | | | | CA | 2784035 | C | 21 July 2020 |
| | | | | CN | 103039107 | A | 10 April 2013 |
| | | | | CN | 103039107 | B | 27 January 2016 |
| | | | | CN | 105813108 | A | 27 July 2016 |
| | | | | CN | 105813108 | B | 01 November 2019 |
| | | | | EP | 2553970 | A2 | 06 February 2013 |
| | | | | EP | 2553970 | B1 | 24 July 2019 |
| | | | | JP | 2013-524616 | A | 17 June 2013 |
| | | | | JP | 2016-036167 | A | 17 March 2016 |
| | | | | JP | 2017-092997 | A | 25 May 2017 |
| | | | | JP | 5830522 | B2 | 09 December 2015 |
| | | | | JP | 6100862 | B2 | 22 March 2017 |
| | | | | JP | 6408049 | B2 | 17 October 2018 |
| | | | | US | 2013-0033998 | A1 | 07 February 2013 |
| | | | | US | 2015-0055502 | A1 | 26 February 2015 |
| | | | | US | 2016-0119907 | A1 | 28 April 2016 |
| | | | | US | 9161236 | B2 | 13 October 2015 |
| | | | | US | 9225450 | B2 | 29 December 2015 |
| | | | | US | 9788316 | B2 | 10 October 2017 |
| | | | | WO | 2011-122833 | A2 | 06 October 2011 |
| | | | | WO | 2011-122833 | A3 | 26 January 2012 |
| KR | 10-2014-0123486 | A | 22 October 2014 | CN | 103988456 | A | 13 August 2014 |
| | | | | CN | 103988456 | B | 24 May 2017 |
| | | | | EP | 2793414 | A1 | 22 October 2014 |
| | | | | EP | 2793414 | B1 | 14 September 2016 |
| | | | | EP | 3131218 | A1 | 15 February 2017 |
| | | | | EP | 3131218 | B1 | 19 June 2019 |
| | | | | KR | 10-1915133 | B1 | 05 November 2018 |
| | | | | KR | 10-2016-0046925 | A | 29 April 2016 |
| | | | | US | 2014-0321313 | A1 | 30 October 2014 |
| | | | | US | 2017-0013489 | A1 | 12 January 2017 |
| | | | | US | 9467881 | B2 | 11 October 2016 |
| | | | | US | 9877215 | B2 | 23 January 2018 |
| | | | | WO | 2013-089530 | A1 | 20 June 2013 |
| WO | 2013-176466 | A1 | 28 November 2013 | CN | 104335653 | A | 04 February 2015 |
| | | | | CN | 104335653 | B | 02 October 2018 |
| | | | | KR | 10-2015-0020559 | A | 26 February 2015 |
| | | | | KR | 10-2108070 | B1 | 08 May 2020 |
| | | | | US | 10154499 | B2 | 11 December 2018 |
| | | | | US | 2015-0133137 | A1 | 14 May 2015 |
| KR | 10-1611608 | B1 | 11 April 2016 | None | | | |
| KR | 10-2014-0009983 | A | 23 January 2014 | EP | 2645605 | A2 | 02 October 2013 |
| | | | | EP | 2645605 | B1 | 11 August 2021 |
| | | | | US | 2013-0225188 | A1 | 29 August 2013 |
| | | | | US | 2015-0189531 | A1 | 02 July 2015 |
| | | | | US | 9008675 | B2 | 14 April 2015 |
| | | | | US | 9781623 | B2 | 03 October 2017 |

Form PCT/ISA/210 (patent family annex) (July 2022)

**INTERNATIONAL SEARCH REPORT**
Information on patent family members

International application No.

**PCT/KR2023/018573**

| Patent document cited in search report | Publication date (day/month/year) | Patent family member(s) | | Publication date (day/month/year) |
|---|---|---|---|---|
| | | WO 2012-070823 | A2 | 31 May 2012 |
| | | WO 2012-070823 | A3 | 19 July 2012 |